(19) Europäisches Patentamt / European Patent Office / Office européen des brevets

(11) **EP 4 435 885 A1**

(12) **EUROPEAN PATENT APPLICATION**
published in accordance with Art. 153(4) EPC

(43) Date of publication:
**25.09.2024 Bulletin 2024/39**

(21) Application number: **22895606.6**

(22) Date of filing: **15.11.2022**

(51) International Patent Classification (IPC):
**H01M 4/133** (2010.01)    **H01M 4/36** (2006.01)
**H01M 4/587** (2010.01)

(52) Cooperative Patent Classification (CPC):
**H01M 4/133; H01M 4/36; H01M 4/587;** Y02E 60/10

(86) International application number:
**PCT/JP2022/042427**

(87) International publication number:
**WO 2023/090325 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.11.2021 JP 2021188645**

(71) Applicant: **Kuraray Co., Ltd.**
**Kurashiki-shi, Okayama 710-0801 (JP)**

(72) Inventors:
• **HASENAKA, Yuki**
**Kurashiki-shi, Okayama 710-0801 (JP)**
• **TACHIKAWA, Kengo**
**Kurashiki-shi, Okayama 710-0801 (JP)**

(74) Representative: **Müller-Boré & Partner**
**Patentanwälte PartG mbB**
**Friedenheimer Brücke 21**
**80639 München (DE)**

(54) **ELECTRODE AND POWER STORAGE ELEMENT**

(57)    The present invention relates to an electrode including at least graphite, a binding agent, and a non-graphitic carbonaceous material, in which, in a half-cell produced with the electrode as a working electrode, Li foil as a counter electrode, and a solution in which lithium hexafluorophosphate is dissolved at a concentration of 1 mol/L in a mixed solution of ethylene carbonate/dimethyl carbonate/ethyl methyl carbonate at a volume ratio of 1/1/1, as an electrolytic solution:

(A) a ratio of an area of a region A to an area of a region B (A/B) is 4.0% or more, in which the areas are calculated based on the following reference points in a cyclic voltammogram obtained by doping the electrode with lithium until a cell voltage of 0.01 V is achieved, and then sweeping the cell voltage from +0.01 V to -0.05 V toward the reduction side and further sweeping the cell voltage to +0.5 V toward the oxidation side at a sweeping rate of 0.01 mV/s in cyclic voltammetry:

E1: a point at which an absolute value of current in a range of -0.05 V ≤ E1 ≤ 0.01 V in a current-voltage curve on the reduction side is minimum

E2: an intersection point of a tangent line on which a slope in a range of -0.05 V ≤ E2 ≤ 0.01 V in a current-voltage curve on the reduction side is maximum, with a coordinate axis of voltage (current = 0 mA)

E3: a point at which an absolute value of current in a range of 0.05 V ≤ E3 ≤ 0.1 V in a current-voltage curve on the oxidation side is minimum

E4: a point at which a voltage of 0.3 V is achieved in a current-voltage curve on the oxidation side;
the region A:
a region surrounded by the current-voltage curve on the reduction side, a straight line passing through the reference point E1 and orthogonal to the coordinate axis of voltage (current = 0 mA), a straight line passing through the reference point E2 and orthogonal to the coordinate axis of voltage (current = 0 mA), and the coordinate axis of voltage (current = 0 mA); and
the region B:
a region surrounded by the current-voltage curve on the oxidation side, a straight line passing through the reference point E3 and orthogonal to the coordinate axis of voltage (current = 0 mA), a straight line passing through reference point E4 and orthogonal to the coordinate axis of voltage (current = 0 mA), and the coordinate axis of voltage (current = 0 mA); and

(B) an electrode mixture density at a charge depth of 50% is 1.30 g/cm$^3$ or more under the assumption that a capacity in doping of the electrode with lithium until a cell

**(Cont. next page)**

voltage of 0.05 V is achieved is a charge depth of 100%.

[FIG.1]

**Description**

[TECHNICAL FIELD]

The present invention relates an electrode, particularly an electrode including graphite, a binding agent and a non-graphitic carbonaceous material, and a power storage element.

[BACKGROUND ART]

Lithium-ion secondary batteries have been conventionally used widely in not only applications of small portable devices such as portable phones and notebook computers, but also applications of large products such as electric automobiles and hybrid electric automobiles, with taking advantage of characteristics such as small size and lightweight. Carbonaceous materials are used in negative electrode materials of lithium-ion secondary batteries, and, for example, graphite, or non-graphitic carbonaceous materials lower in crystallinity than graphite are used. These carbonaceous materials may also be used in combination depending on applications of lithium-ion secondary batteries and characteristics demanded. For example, Patent Document 1 discloses a negative electrode material for lithium-ion secondary batteries, including graphite and a non-graphitic carbonaceous material as active materials.

[PRIOR ART DOCUMENTS]

[PATENT DOCUMENTS]

Patent Document 1: WO 2015/152092 A1

[SUMMARY OF THE INVENTION]

[PROBLEMS TO BE SOLVED BY THE INVENTION]

In recent years, demands for in-car lithium-ion secondary batteries have also increased along with the popularization of electric automobiles, hybrid electric automobiles, and the like. In particular, in-car lithium-ion secondary batteries not only are demanded to ensure a much higher energy density, namely, higher charge/discharge capacity per volume in a restricted space in order to realize a longer cruising distance per charge, but also are needed to have a high ability to suppress metallic lithium deposition in overcharge from the viewpoint of safety of batteries in which charge/discharge is repeated at a high current. The negative electrode material for lithium-ion secondary batteries, described in the above Patent Document, includes a non-graphitic carbonaceous material mixed in graphite and thus can be expected to exhibit a certain degree of the suppression effect of metallic lithium deposition in overcharge. However, as the resistance to deposition of metallic lithium increases, the energy density easily decreases. Therefore, it has been difficult to not only allow batteries to keep a high charge/discharge capacity per volume, but also realize high resistance to deposition of metallic lithium.

An object of the present invention is to provide an electrode to be suitably used as an electrode for power storage elements such as lithium-ion secondary batteries, which not only ensures a high charge/discharge capacity per volume, but also has a high suppression effect of metallic lithium deposition in overcharge.

[SOLUTIONS TO THE PROBLEMS]

The present inventors have made intensive studies in order to solve the above problems, and as a result, have led to the present invention. Specifically, the present invention includes the following aspects.

[1] An electrode comprising at least graphite, a binding agent, and a non-graphitic carbonaceous material, wherein, in a half-cell produced with the electrode as a working electrode, Li foil as a counter electrode, and a solution in which lithium hexafluorophosphate is dissolved at a concentration of 1 mol/L in a mixed solution of ethylene carbonate/dimethyl carbonate/ethyl methyl carbonate at a volume ratio of 1/1/1, as an electrolytic solution:

(A) a ratio of an area of a region A to an area of a region B (A/B) is 4.0% or more, in which the areas are calculated based on the following reference points in a cyclic voltammogram obtained by doping the electrode with lithium until a cell voltage of 0.01 V is achieved, and then sweeping the cell voltage from +0.01 V to -0.05 V toward the reduction side and further sweeping the cell voltage to +0.5 V toward the oxidation side at a sweeping rate of 0.01 mV/s in cyclic voltammetry:

E1: a point at which an absolute value of current in a range of -0.05 V $\leq$ E1 $\leq$ 0.01 V in a current-voltage curve on the reduction side is minimum

E2: an intersection point of a tangent line on which a slope in a range of -0.05 V $\leq$ E2 $\leq$ 0.01 V in a current-voltage curve on the reduction side is maximum, with a coordinate axis of voltage (current = 0 mA)

E3: a point at which an absolute value of current in a range of 0.05 V $\leq$ E3 $\leq$ 0.1 V in a current-voltage curve on the oxidation side is minimum

E4: a point at which a voltage of 0.3 V is achieved in a current-voltage curve on the oxidation side;

the region A:

a region surrounded by the current-voltage curve on the reduction side, a straight line passing through the reference point E1 and orthogonal to the coordinate axis of voltage (current = 0 mA), a straight line passing through the reference point E2 and orthogonal to the coordinate axis of voltage (current = 0 mA), and the coordinate axis of voltage (current = 0 mA); and

the region B:

a region surrounded by the current-voltage curve on the oxidation side, a straight line passing through the reference point E3 and orthogonal to the coordinate axis of voltage (current = 0 mA), a straight line passing through reference point E4 and orthogonal to the coordinate axis of voltage (current = 0 mA), and the coordinate axis of voltage (current = 0 mA); and

(B) an electrode mixture density at a charge depth of 50% is 1.30 $g/cm^3$ or more under the assumption that a capacity in doping of the electrode with lithium until a cell voltage of 0.05 V is achieved is a charge depth of 100%.

[2] The electrode according to [1], wherein a half-band width of a main peak observed in a range of 2θ = 15 to 30° in powder X-ray diffraction measurement by CuKα ray, of the non-graphitic carbonaceous material, is 8.0° or more.

[3] The electrode according to [1] or [2], wherein, in the half-cell, a peak chemical shift value of a resonance signal observed at 50 ppm or more and 200 ppm or less with lithium chloride as reference, by $^7$Li nucleus-solid NMR analysis of an electrode mixture doped with lithium until a charge depth of 150% is achieved, is 80 ppm or more under the assumption that a capacity in doping of the electrode with lithium until a cell voltage of 0.05 V is achieved is a charge depth of 100%.

[4] The electrode according to any one of [1] to [3], wherein a pore volume of the non-graphitic carbonaceous material, as calculated according to the Grand Canonical Monte Carlo simulation, based on an adsorption-desorption isotherm by a carbon dioxide adsorption-desorption method, is 0.004 $cm^3/g$ or more and 0.200 $cm^3/g$ or less.

[5] The electrode according to any one of [1] to [4], wherein a value of a half-value width of a peak around 1360 $cm^{-1}$ in a Raman spectrum observed by laser Raman spectroscopy, of the non-graphitic carbonaceous material, is 160 $cm^{-1}$ or more and 270 $cm^{-1}$ or less.

[6] The electrode according to any one of [1] to [5], wherein an average plane distance $d_{002}$ of the (002) plane of the non-graphitic carbonaceous material, as calculated with the Bragg equation in powder X-ray diffraction measurement by CuKα ray, is 0.36 nm or more and 0.42 nm or less.

[7] The electrode according to any one of [1] to [6], wherein the non-graphitic carbonaceous material contains 0.3% by mass or more of a nitrogen element.

[8] The electrode according to any one of [1] to [7], wherein a ratio of an amount of desorption and an amount of adsorption (amount of desorption/amount of adsorption) at a relative pressure of 0.01 in an adsorption-desorption isotherm by a carbon dioxide adsorption-desorption method, of the non-graphitic carbonaceous material, is 1.05 or more.

[9] The electrode according to any one of [1] to [8], wherein a mesopore volume of the non-graphitic carbonaceous material, as calculated according to the BJH method, based on a nitrogen adsorption-desorption isotherm by a nitrogen adsorption method, is 3.7 $mm^3/g$ or more and 41 $mm^3/g$ or less.

[10] The electrode according to any one of [1] to [9], wherein a volumetric average particle size ($D_{50}$) of the non-graphitic carbonaceous material, by a laser diffraction method, is 1.3 μm or more and 9.5 μm or less.

[11] The electrode according to any one of [1] to [10], wherein a BET specific surface area of the non-graphitic carbonaceous material, as calculated according to the BET method, based on a nitrogen adsorption-desorption isotherm by a nitrogen adsorption method, is 3 $m^2/g$ or more and 60 $m^2/g$ or less.

[12] The electrode according to any one of [1] to [11], comprising 1 part by mass or more and 45 parts by mass or less of the non-graphitic carbonaceous material based on 100 parts by mass of the graphite.

[13] The electrode according to any one of [1] to [12], wherein a ratio of a volumetric average particle size ($D_{50}$) of the non-graphitic carbonaceous material, by a laser diffraction method, and a volumetric average particle size ($D_{50}$) of the graphite, by a laser diffraction method, (particle size of non-graphitic carbonaceous material/particle size of graphite), is 0.3 or more and 0.8 or less.

[14] The electrode according to any one of [1] to [13], wherein the non-graphitic carbonaceous material is a hardly graphitizable carbonaceous material.
[15] A power storage element comprising the electrode according to any of [1] to [14].

[EFFECTS OF THE INVENTION]

The present invention can provide an electrode to be suitably used as an electrode for power storage elements such as lithium-ion secondary batteries, which not only ensures a high charge/discharge capacity per volume, but also has a high suppression effect of metallic lithium deposition in overcharge.

[BRIEF DESCRIPTION OF THE DRAWINGS]

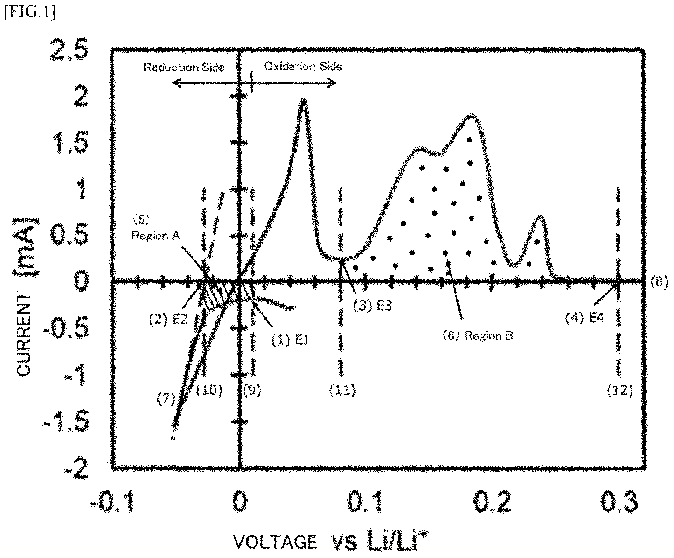

[Fig.1] FIG. 1 is a diagram for describing each reference point based on a cyclic voltammogram.

[DETAILED DESCRIPTION]

Hereinafter, embodiments of the present invention are described in detail. The scope of the present invention is not limited to embodiments described here, and various modifications can be made as long as the gist of the present invention is not impaired.

<Electrode>

The electrode of the present invention is an electrode comprising graphite, a binding agent, and a non-graphitic carbonaceous material. The electrode of the present invention satisfies the following feature (A), in a half-cell produced with the electrode of the present invention as a working electrode, Li foil as a counter electrode, and a solution in which lithium hexafluorophosphate is dissolved at a concentration of 1 mol/L in a mixed solution of ethylene carbonate/dimethyl carbonate/ethyl methyl carbonate at a volume ratio of 1/1/1, as an electrolytic solution.

(A) A ratio of an area of a region A to an area of a region B (A/B) is 4.0% or more, in which the areas are calculated based on the following reference points in a cyclic voltammogram obtained by doping the electrode with lithium until a cell voltage of 0.01 V is achieved, and then sweeping the cell voltage from +0.01 V to -0.05 V toward the reduction side and further sweeping the cell voltage to +0.5 V toward the oxidation side at a sweeping rate of 0.01 mV/s in cyclic voltammetry:

E1: a point at which an absolute value of current in a range of $-0.05\ V \le E1 \le 0.01\ V$ in a current-voltage curve on the reduction side is minimum
E2: an intersection point of a tangent line on which a slope in a range of $-0.05\ V \le E2 \le 0.01\ V$ in a current-voltage curve on the reduction side is maximum, with a coordinate axis of voltage (current = 0 mA)
E3: a point at which an absolute value of current in a range of $0.05\ V \le E3 \le 0.1\ V$ in a current-voltage curve on the oxidation side is minimum
E4: a point at which a voltage of 0.3 V is achieved in a current-voltage curve on the oxidation side;
the region A:
a region surrounded by the current-voltage curve on the reduction side, a straight line passing through the reference point E1 and orthogonal to the coordinate axis of voltage (current = 0 mA), a straight line passing through the reference point E2 and orthogonal to the coordinate axis of voltage (current = 0 mA), and the coordinate axis of voltage (current = 0 mA); and
the region B:
a region surrounded by the current-voltage curve on the oxidation side, a straight line passing through the reference point E3 and orthogonal to the coordinate axis of voltage (current = 0 mA), a straight line passing through reference point E4 and orthogonal to the coordinate axis of voltage (current = 0 mA), and the coordinate axis of voltage (current = 0 mA).

While a cyclic voltammetry (CV) method is a procedure to be utilized for examination of the rate of oxidation-reduction reaction on an electrode surface commonly, it is known to be able to quantitatively determine the amount of electron consumed or released, by sufficiently reducing the voltage sweeping rate and thus completing reaction in an electrode at each potential. It has been found in the present invention that the ratio of the area of the region A and the area of the region B (A/B) in the half-cell produced according to the specified conditions, as calculated based on a current-voltage curve obtained with a cyclic voltammetry method, serves as a new index indicating the amount of a lithium ion acceptable in an electrode in overcharge. The present invention proposes a configuration of an electrode which is controlled with the ratio as an index and is excellent in suppression effect of metallic lithium deposition in overcharge. Specifically, in a case where a cyclic voltammetry method is carried out with respect to a half-cell in which lithium metal foil (Li foil) serves as both a counter electrode and a reference electrode, a reduction current occurs due to deposition of metallic lithium on an electrode at a voltage less than the oxidation-reduction potential (0 V) of lithium. The present inventors have made intensive studies, and as a result, have found that the amount of a lithium ion acceptable in an electrode in overcharge can be measured by subjecting a half-cell in which an electrode is doped with lithium in advance until a terminal voltage of 0.01 V is achieved, to processing including sweeping the cell voltage from +0.01 V to - 0.05 V at a sweeping rate of 0.01 mV/s toward the reduction side and subtracting the content of a reduction current due to metallic Li deposition on a negative electrode. The peak area of a section surrounded by a current-voltage curve in a cyclic voltammogram and a coordinate axis of voltage at a current of 0 mA corresponds to the total amount of electron consumed or released in such a section. However, if the mixture basis weight of an electrode varies, the peak area also varies. Then, lithium (electron) stored in an electrode is fully released by sweeping toward the reduction side and then furthermore sweeping toward the oxidation side to +0.5 V, and the ratio of the peak area on the reduction side (area of region A) to the peak area on the oxidation side (area of region B) (A/B) is calculated, thereby calculating the amount of a lithium ion acceptable in overcharge relative to the amount of a reversibly chargeable/dischargeable lithium ion.

The region A and the region B determined from the cyclic voltammogram are described based on FIG. 1.

The reference point E1 in the cyclic voltammogram is a point [point in (1) in FIG. 1] at which the absolute value of current in a range of -0.05 V to 0.01 V in the current-voltage curve on the reduction side is minimum. The reference point E2 is an intersection point [(2) in FIG. 1] of a tangent line (7) on which the slope in a range of - 0.05 V to 0.01 V in the current-voltage curve on the reduction side is maximum, with a coordinate axis of voltage (current = 0 mA) (8). The reference point E3 is a point [point in (3) in FIG. 1] at which the absolute value of current in a range of 0.05 V to 0.1 V in the current-voltage curve on the oxidation side is minimum. The reference point E4 is a point [point in (4) in FIG. 1] at which a voltage of 0.3 V is achieved in a current-voltage curve on the oxidation side.

The region A is a region [region in (5) in FIG. 1: shaded section] surrounded by the current-voltage curve on the reduction side, a straight line (9) passing through the reference point E1 (1) and orthogonal to the coordinate axis of voltage (current = 0 mA) (8), a straight line (10) passing through the reference point E2 (2) and orthogonal to the coordinate axis of voltage (current = 0 mA) (8), and the coordinate axis of voltage (current = 0 mA) (8). The region B is a region [region in (6) in FIG. 1: dotted section] surrounded by the current-voltage curve on the oxidation side, a straight line (11) passing through the reference point E3 (3) and orthogonal to the coordinate axis of voltage (current = 0 mA) (8), a straight line (12) passing through the reference point E4 (4) and orthogonal to the coordinate axis of voltage (current = 0 mA) (8), and a straight line of the coordinate axis of voltage (current = 0 mA) (8).

A problem possibly occurring in a lithium-ion secondary battery is that, if an overcharge state is generated beyond a full charge state during charge, the negative electrode potential exceeds the reduction overvoltage of a lithium ion and then is lowered to cause a lithium ion in an electrolytic solution to be deposited, as metallic lithium, on a negative electrode. In the present invention, the size of the region A represents the magnitude of the low-potential capacity of the non-graphitic carbonaceous material constituting the electrode of the present invention, and the size of the region B represents the magnitude of the total capacity of the electrode of the present invention, including the graphite and the non-graphitic carbonaceous material. It is meant that, as the area ratio of the region A to the region B (A/B) (hereinafter, also referred to as "CV area ratio") is larger, there is an extra capacity allowing for storage of a lithium ion in overcharge and the effect of suppressing deposition of metallic lithium is excellent. Such an electrode is suited as an electrode for lithium-ion secondary batteries that are demanded to have a low risk of shorting even when repeatedly charged and discharged at a high current and have high safety. Meanwhile, a usual in-car battery is designed so that a negative electrode may be excessively used, in consideration of degradation of a negative electrode due to repeated charge/discharge for a long period and an increase in risk of metallic lithium deposition. The electrode of the present invention is used to enable a sufficient amount of a lithium ion to be stored even in degradation of a negative electrode, and thus enable an excess of a negative electrode to be reduced and enable the charge/discharge capacity per volume of the whole battery to be further enhanced. In other words, the cruising distance of an electric automobile or the like can be elongated.

The value of the CV area ratio (A/B) in the electrode of the present invention is 4.0% or more. An area ratio of less than 4.0% is not preferred because metallic lithium is easily deposited as soon as even a slight overcharge state is made in the case of degradation of a negative electrode, for example, after a long-term charge/discharge cycle. The CV area ratio is preferably 4.5% or more, more preferably 5.5% or more, further preferably 6.5% or more, particularly preferably 7.5% or more because the suppression effect of metallic lithium deposition is more excellent. While the upper limit of the CV area ratio is not particularly limited in terms of the suppression effect of metallic lithium deposition, a non-graphitic carbonaceous material having a large low-potential capacity generally tends to have a smaller reversibly chargeable/dischargeable capacity and also a smaller energy density. Thus, if the CV area ratio is excessively too large, the energy density per volume is difficult to keep. The CV area ratio is preferably 25% or less, more preferably 20% or less, further preferably 18% or less, particularly preferably 16% or less from the viewpoint that, while a high suppression effect of metallic lithium deposition in overcharge is realized, a sufficiently high energy density per volume is kept. In one embodiment of the present invention, the CV area ratio is preferably 4.0 to 25%, and may be, for example, 4.5 to 25%, 5.5 to 20% or 6.5 to 18%, or can be, for example, 7.5 to 16%.

The cyclic voltammetry method can be carried out with a common electrochemical measurement system. Specifically, for example, a cyclic voltammogram (current-voltage curve) can be obtained by producing a CR2032 coin type half-cell with the electrode of the present invention punched to a size of φ14 mm, as a working electrode, Li foil punched to a size of φ15 mm, as a counter electrode, 250 μL of a solution in which lithium hexafluorophosphate is dissolved at a concentration of 1 mol/L in a mixed solution of ethylene carbonate/dimethyl carbonate/ethyl methyl carbonate at a volume ratio of 1/1/1, as an electrolytic solution, and a microporous film made of polyethylene/polypropylene, having a thickness of 20 μm, as a separator, charging the half-cell at a constant current, and then performing sweeping toward the reduction side and sweeping toward the oxidation side according to the above procedure. This cyclic voltammogram can be analyzed to calculate the CV area ratio in an electrode as a measurement object. Specifically, measurement can be made by, for example, a method described in Examples below.

The CV area ratio in the present invention can be controlled by appropriately selecting or adjusting, for example, the types of the graphite and/or the non-graphitic carbonaceous material constituting the electrode, the ratio of the graphite and the non-graphitic carbonaceous material, the state of mixing/distribution of the graphite and the non-graphitic carbonaceous material, the presence, type and structure of a covering of a graphite surface with the non-graphitic carbonaceous material, and permeability of the electrolytic solution into the electrode. For example, in general, the value of the CV area ratio tends to be larger by, for example, increasing the ratio of the non-graphitic carbonaceous material, using natural graphite spheroidized or artificial graphite covered, using a non-graphitic carbonaceous material large in low-potential capacity ratio, eccentrically locating the non-graphitic carbonaceous material in a section of a graphite electrode, the section being closer to the separator, and/or enhancing permeability of the electrolytic solution by a reduction in electrode density and adjustment of a particle size distribution. In general, the value of the CV area ratio tends to be smaller by, for example, increasing the ratio of the graphite, using artificial graphite not covered, using a non-graphitic carbonaceous material small in low-potential capacity ratio, eccentrically locating the non-graphitic carbonaceous material in a section of a graphite electrode, the section being closer to current collection foil, and/or increasing the electrode density and thus reducing permeability of the electrolytic solution.

The electrode of the present invention satisfies the following feature (B), in a half-cell produced with the electrode of the present invention as a working electrode, Li foil as a counter electrode, and a solution in which lithium hexafluorophosphate is dissolved at a concentration of 1 mol/L in a mixed solution of ethylene carbonate/dimethyl carbonate/ethyl methyl carbonate at a volume ratio of 1/1/1, as an electrolytic solution.
(B) An electrode mixture density at a charge depth of 50% is 1.3 g/cm$^3$ or more under the assumption that a capacity in doping of the electrode with lithium until a cell voltage of 0.05 V is achieved is a charge depth of 100%.

The electrode mixture density is directly associated with the electrode volume, and thus an electrode high in mixture density is high in energy density per volume, and is advantageously adopted particularly as an electrode for in-car lithium-ion secondary batteries or the like, which is demanded to have a high energy density per volume. In this regard, an electrode mixture containing graphite tends to be lower in electrode mixture density, when included in an electrode in a battery subjected to charge/discharge, than when included in an electrode in a battery immediately after production, because press stress in electrode production is eliminated and/or charge and discharge are repeated along with expansion and shrinkage of a graphite particle itself. The present invention then proposes a configuration of a more practically useful electrode having a high energy density per volume, by adopting a factor involving inclusion in a battery subjected to charge/discharge and the electrode mixture density at a charge depth of 50%, which is a more important factor in actual use of a battery, as an index, and controlling the electrode mixture density.

The electrode mixture density at a charge depth of 50%, of the electrode of the present invention, is 1.30 g/cm$^3$ or more. If the electrode mixture density is less than 1.30 g/cm$^3$, no sufficient energy can be stored in a restricted battery space and a sufficiently long cruising distance necessary for electric automobiles is difficult to ensure. The electrode mixture density is preferably 1.33 g/cm$^3$ or more, more preferably 1.35 g/cm$^3$ or more, further preferably 1.37 g/cm$^3$ or more. The upper limit of the electrode mixture density at a charge depth of 50% is not particularly limited, may be, for example, 1.60 g/cm$^3$ or less, and is preferably 1.55 g/cm$^3$ or less, more preferably 1.52 g/cm$^3$ or less. If the electrode mixture density at a charge depth of 50% is equal to or less than the upper limit, a sufficient amount of the electrolytic solution easily permeates into the electrode mixture and an increase in ion transfer resistance in association with charge is hardly caused. Thus, metallic lithium deposition on an electrode surface in association with an increase in ion transfer resistance can be suppressed. In one embodiment of the present invention, the electrode mixture density is preferably 1.30 to 1.60 g/cm$^3$, more preferably 1.33 to 1.60 g/cm$^3$, and may be, for example, 1.35 to 1.55 g/cm$^3$ or 1.37 to 1.52 g/cm$^3$.

The electrode mixture density at a charge depth of 50%, of the electrode, can be measured by, for example, the following procedure. First, the weight of the electrode mixture punched to a size of φ 14 mm and sufficiently dried and the electrode area are recorded. Subsequently, a half-cell produced with the electrode in the same manner as in measurement of the CV area ratio by the cyclic voltammetry method described above is subjected to initial charge/discharge according to the following conditions to determine the charge capacity as a charge depth of 100%, and then subjected to constant-current charge at 0.2 C until a charge depth of 50% is achieved relative to the charge depth of 100%. This cell is disassembled under an inert gas in a glove box or the like to take out the electrode, the electrolytic solution attached to the electrode is washed with a nonreactive and highly electrolyte-soluble solvent such as diethyl carbonate, an excess of the solvent is removed by air drying, then the thickness of the electrode mixture is measured, the weight of the electrode mixture before initial charge/discharge is divided by the mixture thickness and the electrode area, and thus the electrode mixture density can be calculated. The thickness of the electrode mixture can be measured with, for example, a high-accuracy digimatic micrometer capable of measuring the thickness by 0.1 $\mu$m. The detailed method for measuring the electrode mixture density at a charge depth of 50% of the electrode is described in Examples below.

For example, in a battery with a lithium salt of transition metal oxide in a positive electrode, the doping reaction of a carbon electrode with lithium corresponds to "charge". In a battery with lithium metal in a counter electrode as in the half-cell (coin cell) in the present invention, lithium metal has a lower oxidation-reduction potential and thus the doping reaction of a carbon electrode is to be called "discharge". Thus, the designation of the same doping reaction of a carbon electrode with lithium differs depending on the counter electrode used. The doping reaction of a carbon electrode with lithium is here designated as "charge" for convenience. On the contrary, the "discharge" corresponds to the charge reaction in the half-cell (coin cell), but corresponds to the dedoping reaction of a carbonaceous material with lithium, and thus is designated as "discharge" for convenience.

The doping reaction and dedoping reaction of the carbon electrode (the electrode of the present invention) with lithium is performed by a constant-current method. Specifically, the initial charge/discharge is performed by constant-current charge at 0.2 C (the amount of current, leading to completion of charge at 1/0.2 = 5 hours) until a terminal voltage of 0.05 V is achieved, and a battery circuit is opened for 30 minutes after completion of the charge. Next, constant-current discharge is performed at 0.2 C and the final voltage is set to 1.5 V. Such a charge/discharge operation is carried out three times or more so that the charge/discharge efficiency (discharge capacity/charge capacity in each cycle) is 99.5% or more, and the discharge capacity in a cycle in which the efficiency first exceeds 99.5% is defined as a charge depth of 100%. The half-cell (coin cell) can be charged and discharged at room temperature (for example, 25°C) with a common charge/discharge test apparatus.

The electrode mixture density at a charge depth of 50% of the electrode can be controlled by appropriately selecting or adjusting, for example, the type(s) of the graphite and/or the non-graphitic carbonaceous material constituting the electrode, the ratio of the graphite and the non-graphitic carbonaceous material, particle size distribution(s) of the graphite and/or the non-graphitic carbonaceous material, the particle shape(s) of the graphite and/or the non-graphitic carbonaceous material, the pressure applied and the rolling speed in rolling of the electrode, and/or the basis weight of the electrode mixture. For example, the electrode mixture density at a charge depth of 50% tends to be higher by, for example, using natural graphite, using a petroleum/coal-derived non-graphitic carbonaceous material, broadening such particle size distribution(s), increasing the pressure applied in such rolling, decreasing the rolling speed, and/or increasing the basis weight of the electrode mixture.

In the present invention, the basis weight of the electrode mixture is preferably 50 to 100 g/m$^2$, more preferably 55 to 95 g/m$^2$, further preferably 60 to 95 g/m$^2$, and may be, for example, 60 to 90 g/m$^2$. The basis weight of the electrode mixture is adjusted in the above range, and thus the electrode mixture density at a charge depth of 50% can be controlled in the desired range.

The electrode of the present invention preferably satisfies the following: a peak chemical shift value of a resonance signal observed at 50 ppm or more and 200 ppm or less with lithium chloride as reference by $^7$Li nucleus-solid NMR analysis of an electrode mixture doped with lithium until a charge depth of 150% is achieved is preferably more than 80 ppm under the assumption that a capacity in doping of the electrode with lithium until a cell voltage of 0.05 V is achieved is a charge depth of 100%; in a half-cell produced with the electrode of the present invention as a working electrode, Li foil as a counter electrode, and a solution in which lithium hexafluorophosphate is dissolved at a concentration of 1 mol/L in a mixed solution of ethylene carbonate/dimethyl carbonate/ethyl methyl carbonate at a volume ratio of 1/1/1, as an electrolytic solution.

It is known that, as metallicity of lithium increases, a signal is observed at a lower magnetic field in $^7$Li nucleus-solid NMR analysis. When a signal assigned to lithium chloride is assumed to be at 0 ppm, a signal assigned to lithium stored in graphite, in an ionic state, is observed at 0 to 50 ppm and a signal assigned to metallic lithium is observed around 260 ppm. Since ionic lithium is stored between carbon layers and additionally cluster-shaped lithium is stored in an amorphous section at low potential in the non-graphitic carbonaceous material, one signal obtained by averaging these signals is observed at 50 to 200 ppm.

In the present invention, a peak position in a range of 50 to 200 ppm of a resonance signal by $^7$Li nucleus-solid NMR analysis, of the electrode mixture doped with lithium until a charge depth of 150% is achieved, is preferably at 80 ppm or more. When the peak position is at 80 ppm or more, the proportion of an amorphous section suitable for doping with lithium at low potential is high and deposition of metallic lithium is suppressed even in an overcharge state of a graphite electrode. The lower limit of the peak position is preferably at 80 ppm or more, more preferably at 85 ppm or more, more preferably at 90 ppm or more, or may be, for example, at 120 ppm or more. While the upper limit of the peak position is not particularly set, for example, thermal shrinkage of the non-graphitic carbonaceous material tends to excessively progress to decrease a site that can be reversibly doped with lithium and the energy density per volume may be difficult to keep, in a case where a peak is observed at 140 ppm or more in the lower magnetic field. Therefore, the upper limit is preferably at 135 ppm or less. In one embodiment of the present invention, the peak position is preferably at 80 ppm or more and less than 140 ppm, more preferably at 85 to 135 ppm, further preferably at 90 to 135 ppm, and can be in a range of any combination of the lower limit and the upper limit.

The peak chemical shift value of the resonance signal can be calculated in the same manner as in measurement of the electrode mixture density described above, by subjecting a half-cell (coin cell) initially charged and discharged until a charge depth of 0% is achieved, to constant-current charge at 0.05 C until a charge depth of 150% is achieved, then disassembling the half-cell in a glove box to take out an electrode, washing the electrode with diethyl carbonate and air drying the resultant, then releasing the electrode mixture from current collection foil by ceramic tweezers or the like, and subjecting the electrode mixture to $^7$Li nucleus-solid NMR analysis. In measurement, lithium chloride is used as an external standard substance, and assumed to be observed at 0 ppm. In $^7$Li nucleus-solid NMR of the electrode mixture, usually, a signal assigned to lithium stored in graphite is observed at 0 to 50 ppm, a signal assigned to lithium stored in the non-graphitic carbonaceous material is observed at 50 to 200 ppm, and a signal assigned to metallic lithium is observed around 260 ppm. In particular, a resonance signal observed in a range of 50 to 200 ppm is regulated in phase and the peak shape is made bilaterally symmetric, and the chemical shift value of a peak position here providing the local maximal value may be read. Specifically, measurement can be made by, for example, a method described in Examples below.

The peak chemical shift value of the resonance signal can be controlled by appropriately selecting or adjusting, for example, the type of the non-graphitic carbonaceous material constituting the electrode, and/or the heat treatment temperature. For example, the peak position of a resonance signal in a range of 50 to 200 ppm by $^7$Li nucleus-solid NMR analysis tends to be observed in the lower magnetic field (increased in numerical value) by using a plant raw material-derived non-graphitic carbonaceous material, or using a non-graphitic carbonaceous material produced at a high heat treatment temperature.

The electrode of the present invention includes a non-graphitic carbonaceous material. In the present invention, a conventionally known non-graphitic carbonaceous material can be used as the non-graphitic carbonaceous material as long as it can satisfy the above-mentioned CV area ratio and electrode mixture density at a charge depth of 50% in a relation thereof with graphite used in formation of the electrode. The above-mentioned CV area ratio and electrode mixture density are easily satisfied by mixing with graphite, and thus, in one aspect of the present invention, the non-graphitic carbonaceous material is preferably one having physical properties and characteristics described below.

<Non-graphitic carbonaceous material>

In one aspect of the present invention, the half-band width of a main peak observed in a range of $2\theta$ = 15 to 30° in powder X-ray diffraction measurement by CuK$\alpha$ ray, of the non-graphitic carbonaceous material, is preferably 8.0° or more. The half-band width of the main peak is a value calculated by fitting with the Gaussian function. The half-band width of the main peak correlates with the size of a crystallite by stacking of a carbon plane, and is a very small value of about 0.4°, for example, in the case of a material having a stacked structure grown, as in graphite. On the contrary, the non-graphitic carbonaceous material is restricted in growth of a layered structure due to a three-dimensional crosslinking point in a carbon structure and includes a crystallite having various carbon plane distances, and thus a broadened peak is observed. When the peak half-band width is 8.0° or more, the crosslinking point density is sufficiently high, the proportion of an amorphous region suitable for storage of lithium in overcharge is high, and a high suppression effect of metallic lithium deposition can be expected. In the present invention, the peak half-band width is more preferably 8.3° or more, more preferably 8.5° or more, further preferably 8.6° or more, particularly preferably 8.7° or more. The upper limit of the peak half-band width is not particularly limited, and is, for example, 10° or less, and the peak half-band width can be in a range of any combination of the lower limit and the upper limit. When the peak half-band width is equal to or less than the upper limit, a stacked structure of a carbon plane of the carbonaceous material is sufficiently grown and a site that can be reversibly doped with lithium is sufficiently present, and the energy density per volume can be suitably kept.

The peak half-band width can be measured by, for example, a method described in Examples below.

In one aspect of the present invention, the pore volume of the non-graphitic carbonaceous material, as determined by performing the Grand Canonical Monte Carlo simulation of an adsorption-desorption isotherm of carbon dioxide (hereinafter, also simply referred to as "pore volume"), is preferably 0.004 cm$^3$/g or more and 0.200 cm$^3$/g or less, more preferably 0.050 cm$^3$/g or more, further preferably 0.100 cm$^3$/g or more, particularly preferably 0.130 cm$^3$/g or more,

and is more preferably 0.190 $cm^3/g$ or less, further preferably 0.180 $cm^3/g$ or less, particularly preferably 0.170 $cm^3/g$ or less. The pore volume can be in a range of any combination of the lower limit and the upper limit. When the pore volume is equal to or more than the lower limit, thermal shrinkage of the non-graphitic carbonaceous material is considered to be appropriately controlled, and the capacity allowing for reversible doping with lithium can be increased. When the pore volume is equal to or less than the upper limit, an active site serving as the point of origin of side reaction is hardly increased and thus the battery lifetime is easily enhanced even in the case of charge/discharge repeatedly performed.

The pore volume determined by performing the Grand Canonical Monte Carlo simulation of an adsorption-desorption isotherm of carbon dioxide in the present invention is described. The pore volume of a mesopore (pore having a pore diameter of about 2 nm or more and about 50 nm or less) or micropore (pore having a pore diameter of about less than 2 nm) can be usually determined by applying an analysis method called BJH method or MP method to an adsorption-desorption isotherm of nitrogen at 77 K. However, in the present invention, an adsorption-desorption isotherm of carbon dioxide at 273 K is used. The reason for this is because the present method can allow for more detailed evaluation of a pore structure by use of carbon dioxide smaller in molecular size than nitrogen and due to measurement at a higher temperature and thus no formation of any cluster of molecules. Therefore, it has been found that a pore serving as the point of origin of side reaction having an influence on lifetime, while is difficult to evaluate by a usual measurement method, can be more accurately evaluated and, for example, an inconsistency (hysteresis) between an adsorption curve and a desorption curve, which is considered to be derived from an ink bottle-type pore described below, can be more accurately measured.

The pore volume, for example, at a pore diameter of about 0.4 to 50 nm can be determined by the Grand Canonical Monte Carlo simulation of an adsorption-desorption isotherm of carbon dioxide. The pore volume can be specifically determined by a method described in Examples below.

In one aspect of the present invention, the half-value width value of a peak around 1360 $cm^{-1}$ in a Raman spectrum observed by laser Raman spectroscopy, of the non-graphitic carbonaceous material, is preferably 160 $cm^{-1}$ or more and 270 $cm^{-1}$ or less. The "peak around 1360 $cm^{-1}$" here refers to a Raman peak generally called D band, and is a peak due to the disturbance/defection of a graphite structure. A peak around 1360 $cm^{-1}$ is generally observed in a range of 1345 $cm^{-1}$ to 1375 $cm^{-1}$, preferably in a range of 1350 $cm^{-1}$ to 1370 $cm^{-1}$. The half-value width of such a peak is associated with the amount of the disturbance/defection of a graphite structure included in the carbonaceous material. Such a disturbance of the structure can be caused by introduction of a nitrogen element into a carbon skeleton. When the half-value width of a Raman peak in a D band is 160 $cm^{-1}$ or more, the disturbance/defection of a graphite structure included in the carbonaceous material is moderately observed and a micropore between crystals is sufficiently easily present. Thus, many sites for storage of a lithium ion can be ensured and the charge/discharge capacity is easily enhanced. The half-value width value of a peak around 1360 $cm^{-1}$ is preferably 190 $cm^{-1}$ or more, more preferably 200 $cm^{-1}$ or more, further preferably 210 $cm^{-1}$ or more from the viewpoint of an easy increase in charge/discharge capacity. When the half-value width is 270 $cm^{-1}$ or less, the disturbance/defection of a graphite structure included in the carbonaceous material is not so increased and many sites allowing for storage of lithium can be ensured. Thus, the discharge capacity is easily enhanced. The half-value width value of a peak around 1360 $cm^{-1}$ is more preferably 270 $cm^{-1}$ or less, or less than 270 $cm^{-1}$, further preferably 260 $cm^{-1}$ or less, particularly preferably 250 $cm^{-1}$ or less, especially preferably 245 $cm^{-1}$ or less, from such a viewpoint. The half-value width can be in a range of any combination of the lower limit and the upper limit.

The half-value width value of a peak around 1360 $cm^{-1}$ in a Raman spectrum can be measured by, for example, a method described in Examples below.

In one aspect of the present invention, the average plane distance $d_{002}$ of the (002) plane of the non-graphitic carbonaceous material, as calculated with the Bragg equation from a peak position (diffraction angle 2θ) in powder X-ray diffraction measurement by CuKα ray, is preferably 0.36 nm or more and 0.42 nm or less. For example, in a case where carbon planes are closest to each other as in graphite, the $d_{002}$ is about 0.335 to 0.34 nm. If the $d_{002}$ of the non-graphitic carbonaceous material is significantly different therefrom, carbon planes cannot interact to each other and a layered structure cannot be kept. In one aspect of the present invention, the $d_{002}$ of the non-graphitic carbonaceous material is preferably broad to such an extent that it does not exceed 0.42 nm from the viewpoint that a lithium ion can be efficiently transferred. Therefore, the $d_{002}$ of the non-graphitic carbonaceous material in the present invention is more preferably 0.37 nm or more, further preferably 0.38 nm or more, and more preferably 0.40 nm or less, further preferably 0.39 nm or less. The average plane distance $d_{002}$ can be in a range of any combination of the lower limit and the upper limit.

The average plane distance ($d_{002}$) can be measured by, for example, a method described in Examples below.

In one aspect of the present invention, the true density (butanol true density) of the non-graphitic carbonaceous material measured by a butanol immersion method, is preferably 1.52 g/cc or less. The non-graphitic carbonaceous material, when has a butanol true density in an appropriate range, has a moderate void, and thus can accommodate lithium deposited in the case of an overcharge state of a graphite electrode. The butanol true density is more preferably less than 1.52 g/cc, further preferably 1.51 g/cc or less from such a viewpoint. On the other hand, a too low butanol true density leads to a reduction in electrode mixture density, and cannot sometimes increase the reversible capacity per volume. The butanol true density is preferably 1.45 g/cc or more, more preferably 1.46 g/cc or more from such a viewpoint.

In one aspect of the present invention, the non-graphitic carbonaceous material preferably contains 0.3% by mass or more of a nitrogen element. When the content of a nitrogen element in the non-graphitic carbonaceous material is 0.3% by mass or more, a site for adsorption/desorption of a lithium ion in charge/discharge is sufficiently easily ensured and the charge/discharge capacity is easily enhanced. Even in the case of an overcharge state of a graphite electrode, an excess lithium ion can be much more accommodated. The content of a nitrogen element in the non-graphitic carbonaceous material is more preferably 0.4% by mass or more, further preferably 0.5% by mass or more from the viewpoint of allowing a sufficient discharge capacity to be exhibited. On the other hand, a too high content of such a nitrogen element easily causes strain in the structure of the non-graphitic carbonaceous material and hardly allows a layered structure to be kept, and thus tends to decrease a site for adsorption/desorption of a lithium ion. Nitrogen not incorporated into any carbon skeleton is expected to be present as, for example, a surface functional group such as a $-NH_2$ group, and a too increase in amount of presence of such a surface functional group may hardly allow for suppression of irreversible side reaction possibly occurring in charge/discharge. The content of a nitrogen element of the non-graphitic carbonaceous material in the present invention is preferably 5.0% by mass or less, more preferably 3.5% by mass or less, further preferably 3.0% by mass or less from the viewpoint of effective suppression of such irreversible side reaction in charge/discharge and easy increases in discharge capacity and charge/discharge efficiency. In one embodiment of the present invention, the content of such a nitrogen element is preferably 0.3 to 5.0% by mass, and may be, for example, 0.4 to 3.5% by mass or 0.5 to 3.0% by mass.

The content of such a nitrogen element can be measured by an elemental analysis method (inert gas dissolution method). Specifically, measurement can be made by, for example, a method described in Examples below.

In one aspect of the present invention, the ratio of the amount of desorption and the amount of adsorption (amount of desorption/amount of adsorption) at a relative pressure of 0.01 in an adsorption-desorption isotherm by a carbon dioxide adsorption-desorption method, of the non-graphitic carbonaceous material, is preferably 1.05 or more. When the ratio of the amount of desorption and the amount of adsorption is 1.05 or more, thermal shrinkage of the non-graphitic carbonaceous material is appropriately suppressed, and the capacity allowing for reversible doping with lithium is increased and an amorphous structure suitable for storage of lithium at low potential is increased, and thus this ratio is preferred in terms of the suppression effect of lithium deposition. The ratio of the amount of desorption and the amount of adsorption is more preferably 1.08 or more, further preferably 1.10 or more, particularly preferably 1.20 or more, especially preferably 1.40 or more. The upper limit of the ratio of the amount of desorption and the amount of adsorption is not particularly limited, and is usually 10.0 or less, and the above ratio of the amount of adsorption can be in a range of any combination of the lower limit and the upper limit. When the ratio of the amount of desorption and the amount of adsorption is in the range, the battery lifetime tends to be more enhanced even in the case of charge/discharge repeatedly performed.

In the present invention, the ratio of the amount of desorption and the amount of adsorption refers to a value obtained by dividing the amount of desorption by the amount of adsorption, namely, a value of amount of desorption/amount of adsorption. The amount of desorption and the amount of adsorption of carbon dioxide can be measured with a gas adsorption apparatus, and can be determined by, for example, a method described in Examples below.

The description is here made about the ratio of the amount of desorption and the amount of adsorption (amount of desorption/amount of adsorption) at a relative pressure of 0.01 in an adsorption-desorption isotherm of carbon dioxide. In a case where a tubular pore with one end closed is assumed, an adsorption curve and a desorption curve should be theoretically matched. However, an inconsistency (hysteresis) between an adsorption curve and a desorption curve may occur depending on the structure of a pore. While there are various theories about the reason for such a phenomenon, a theory has been proposed where such a hysteresis occurs in the case of an ink bottle-type pore. In other words, an ink bottle-type pore has a neck portion (the neck portion radius is shorter than the bottom portion radius), and thus has different saturated vapor pressures. If a relative pressure is changed so as to be lowered, no evaporation occurs in an adsorption layer of the neck portion until the saturated vapor pressure corresponding to the neck portion radius is achieved. In other words, even if evaporation is tried to occur first in an adsorption layer of the bottom portion, desorption hardly occurs due to pushing by a condensation layer at an inlet, and detachment rapidly occurs when the saturated vapor pressure corresponding to the neck portion radius is achieved. Thus, the difference between the amount of adsorption and the amount of desorption easily occurs and the amount of desorption is likely larger than the amount of adsorption. Therefore, the ratio of the amount of desorption and the amount of adsorption at a relative pressure of 0.01 in an adsorption-desorption isotherm being in the above range indicates the capability of presence of an ink bottle-type pore.

In one aspect of the present invention, the mesopore volume of the non-graphitic carbonaceous material, as calculated according to the BJH method, based on a nitrogen adsorption-desorption isotherm by a nitrogen adsorption method, is preferably 3.7 mm$^3$/g or more and 41 mm$^3$/g or less. When the mesopore volume is in the range, thermal shrinkage of the non-graphitic carbonaceous material is appropriately suppressed, and the capacity allowing for reversible doping with lithium tends to increase. Furthermore, the mesopore volume in the range is preferred because the diffusion rate of a lithium ion is increased and thus the capacity in rapid charge/discharge is increased. The mesopore volume is more preferably 4.0 mm$^3$/g or more, further preferably 5.0 mm$^3$/g or more, and more preferably 35 mm$^3$/g or less, further preferably 22 mm$^3$/g or less. The mesopore volume can be in a range of any combination of the lower limit and the upper limit. The "mesopore volume" here generally refers to the volume of a pore having a pore diameter of about 2 nm or more and about 50 nm or less, and, in the present invention, refers to a pore of 2.5 nm or more and 33 nm or less particularly from the viewpoint of evaluation of an active site serving as the point of origin of side reaction and diffusivity of the electrolytic solution. The mesopore volume can be measured with a gas adsorption apparatus, and can be determined by, for example, a method described in Examples.

In one aspect of the present invention, the volumetric average particle size (D$_{50}$) of the non-graphitic carbonaceous material, by a laser diffraction method, is preferably 1.3 $\mu$m or more and 9.5 $\mu$m or less, more preferably 2.2 $\mu$m or more, further preferably 2.6 $\mu$m or more, and more preferably 8.0 $\mu$m or less, further preferably 6.0 $\mu$m or less, particularly preferably 5.5 $\mu$m or less. The average particle size can be in a range of any combination of the lower limit and the upper limit. When the average particle size is equal to or less than the upper limit, the non-graphitic carbonaceous material in the electrode is sufficiently large in number thereof and is dispersed in the entire electrode. Thus, metallic lithium is hardly deposited on graphite even if there is the variation in charge reaction. A void between particles of graphite and the non-graphitic carbonaceous material is also easily embedded and the electrode density is easily enhanced. When the average particle size is equal to or more than the lower limit, fine particles of the non-graphitic carbonaceous material are hardly aggregated and easily uniformly dispersed. Thus, a reduction in electrode density due to a void generated in the electrode due to aggregation hardly occurs.

The volumetric average particle size (D$_{50}$) in the present invention refers to a volumetric average particle size at which the cumulative volume from the fine particle side reaches 50% in a particle size distribution measured by a laser scattering method. The volumetric average particle size (D$_{50}$) can be determined by, for example, a method described in Examples.

In one aspect of the present invention, the BET specific surface area of the non-graphitic carbonaceous material, as calculated according to the BET method, based on a nitrogen adsorption-desorption isotherm by a nitrogen adsorption method, is preferably 3 m$^2$/g or more and 60 m$^2$/g or less, more preferably 5 m$^2$/g or more, further preferably 6 m$^2$/g or more, and more preferably 40 m$^2$/g or less, further preferably 35 m$^2$/g or less. The BET specific surface area can be in a range of any combination of the lower limit and the upper limit. When the BET specific surface area is in the range, thermal shrinkage of the non-graphitic carbonaceous material is appropriately suppressed and a pore suitable for storage of lithium is easily formed. Therefore, the capacity allowing for reversible doping with lithium is easily enhanced. An advantage is also that side reaction with the electrolytic solution hardly occurs.

The BET specific surface area can be measured with a gas adsorption apparatus, and can be calculated by, for example, a method described in Examples below.

Various physical properties and characteristics described above of the non-graphitic carbonaceous material can be controlled by appropriately selecting or adjusting, for example, the type of a carbon precursor used in the non-graphitic carbonaceous material, the type of an additive, the heat treatment temperature and time in a production process, surface covering treatment, pulverization/classification treatment, and/or high purification treatment.

Examples of the non-graphitic carbonaceous material in the present invention include a hardly graphitizable carbonaceous material (hard carbon), an easily graphitizable carbonaceous material (soft carbon), coke, mesophase pitch, activated carbon, or a composite thereof. Among them, a hardly graphitizable carbonaceous material or an easily graphitizable carbonaceous material can be suitably used because of having an amorphous structure suitable for storage of lithium at low potential. In particular, a hardly graphitizable carbonaceous material is particularly suitable as the non-graphitic carbonaceous material constituting the electrode of the present invention because the capacity allowing for reversible doping with lithium can be significantly adjusted by crosslinking conditions, heat treatment conditions, and/or the like, and the amount of an amorphous structure is also particularly large.

A hardly graphitizable carbonaceous material having various physical properties and/or characteristics described above can be prepared by, for example, any method described below.

(1) A method including a step of raising the temperature of a carbon precursor having a BET specific surface area of 500 m$^2$/g or less by a nitrogen adsorption method, to 900°C (preferably, the step is performed in the presence of a volatile organic substance), in which the rate of temperature rise between 600°C or more and 900°C or less in the step is 60°C/min or less, or

(2) A method including a step of heat-treating a carbon precursor having a BET specific surface area of 500 m$^2$/g or less by a nitrogen adsorption method, at a temperature of 600°C or more and less than 900°C for more than five minutes in the presence of a volatile substance derived from a volatile organic substance.

It is presumed that the following reaction occurs by raising the temperature of the volatile organic substance or the carbon precursor and/or heat-treating the carbon precursor in the presence of a volatile substance derived from a volatile organic substance in the method. It is considered that a skin part can be formed on a surface of a calcined product (heat-treated product) of a carbon precursor having a volatile component as a core, in such temperature rise and/or heat treatment step(s). A skin part is here effectively formed by appropriately adjusting the rate of temperature rise in such temperature rise and/or heat treatment step(s). It is considered that thus a pore in the carbon precursor is narrower to provide an ink bottle-type pore having an opening (hereinafter, formation of such a skin part is sometimes referred to as modofication). A hardly graphitizable carbonaceous material having such a structure easily allows for a decrease of an active site serving as the point of origin of side reaction, even at a low heat treatment temperature, by modification with a volatile substance derived from a volatile organic substance. Thus, the battery lifetime is easily enhanced even in the case of charge/discharge repeatedly performed.

[Carbon precursor]

The carbon precursor serving as a raw material of a hardly graphitizable carbonaceous material is not particularly limited as long as the carbonaceous material can be formed, and can be widely selected from, for example, a plant-derived carbon precursor, a mineral-derived carbon precursor, a natural material-derived carbon precursor and a synthetic material-derived carbon precursor. The carbonaceous material based on a plant-derived carbon precursor may be advantageous from the viewpoint of protection of environment and from a commercial viewpoint.

Examples of the mineral-derived carbon precursor include petroleum-based and coal-based pitch, and coke. Examples of the natural material-derived carbon precursor include natural fibers such as cotton and hemp, regenerated fibers such as rayon and viscose rayon, and semisynthetic fibers such as acetate and triacetate. Examples also include monosaccharides such as glucose, galactose, mannose, fructose, ribose, and glucosamine, disaccharides such as sucrose, trehalose, maltose, cellobiose, maltitol, lactobionic acid, and lactosamine, and polysaccharides such as starch, glycogen, agarose, pectin, cellulose, chitin, chitosan, oligosaccharide, and xylitol. Examples of the synthetic material-derived carbon precursor include polyamides such as nylon, polyvinyl alcohols such as vinylon fibers, polyacrylonitriles such as acrylic fibers, polyolefins such as polyethylene and polypropylene, polyurethane, phenolic resin, and vinyl chloride-based resin.

The plant serving as a raw material of the plant-derived carbon precursor (hereinafter, sometimes referred to as "plant-derived char") is not particularly limited. Examples thereof may include coconut shell, coffee bean, tea leaf, sugar cane, fruits (for example, orange, banana), straw, chaff, broad-leaved tree, needle-leaved tree, and bamboo. These examples encompass waste after use in the original application (for example, used tea leaf) or one portion of the plant serving as the raw material (for example, banana or orange skin). Such plants can be used singly or in combination of two or more kinds thereof. Among these plants, a coconut shell is preferred because of being easily available in a large amount.

The "char" generally refers to a powdered solid which is obtained in heating of coal, which is not molten and softened, and which is rich in carbon content, and here also refers to a powdered solid which is obtained by heating of an organic substance, which is not molten and softened, and which is rich in carbon content.

The coconut shell is not particularly limited, and examples thereof may include respective coconut shells of palm (oil palm), coconut palm, salak, and double coconut. Such coconut shells can be used singly or in combination of two or more kinds thereof. Respective coconut shells of coconut palm and palm which are utilized for, for example, foods, raw materials for detergents, and raw materials for biodiesel fuel and which are biomass waste generated in large numbers are particularly preferred.

The method of producing char from the coconut shell is not particularly limited, and can be produced by using a method known in the art. For example, char can be produced by heat-treating the coconut shell in an atmosphere of, for example, an inert gas such as nitrogen, carbon dioxide, helium, argon, carbon monoxide or a fuel exhaust gas, a mixed gas with such an inert gas, or a mixed gas with any other gas, the mixed gas containing mainly such an inert gas, (for example, a mixed gas of nitrogen with a halogen gas) at a temperature of about 300 to 1000°C (hereinafter, sometimes referred to as "calcination").

Alternatively, it is possible to obtain in the form of char (for example, coconut shell char).

The hardly graphitizable carbonaceous material prepared from the plant-derived char can be doped with a large amount of an active material, and is basically suited as the non-graphitic carbonaceous material for constituting the electrode of the present invention. However, the plant-derived char generally often includes a large amount of a metal element (in particular, potassium, iron, and the like) contained in a plant raw material, and may have any undesirable influence on electrochemical characteristics and safety, in the case of use of an electrode including such a carbonaceous material high in content of a metal element, for a power storage element such as a lithium-ion secondary battery. Therefore, the content of a potassium element, an iron element, and the like contained in a carbonaceous material is preferably decreased as much as possible.

The plant-derived char often includes an alkali metal (for example, sodium), an alkaline-earth metal (for example, magnesium or potassium), a transition metal (for example, copper) and any other element (hereinafter, these are also collectively referred to as "ash"), in addition to potassium and iron elements. In a case where an electrode including a non-graphitic carbonaceous material containing such metal elements is used for a negative electrode of a power storage element such as a lithium-ion secondary battery, impurities can be eluted into an electrolytic solution during dedoping from the negative electrode to have an undesirable influence on battery performance and impair reliability of such a power storage element, and thus the content of such metals is also preferably decreased.

Therefore, the content of ash (alkali metal element, alkaline-earth metal element, transition metal element, and any other elements) in the plant raw material or plant-derived char is preferably reduced before the carbon precursor is heated and heat-treated. The "reducing the ash content in the plant raw material or plant-derived raw material-derived char" is also referred to as "demineralization" below. The demineralization method is not particularly restricted, and there can be used, for example, a method (liquid phase demineralization) including extracting and demineralizing a metal content with an acidic solution containing a mineral acid such as hydrochloric acid or sulfuric acid, or an organic acid such as acetic acid or formic acid, or a method (gas phase demineralization) including performing demineralization by exposure to a high-temperature gas phase containing a halogen compound such as hydrogen chloride.

The liquid phase demineralization may be carried out with any form of the plant raw material or plant-derived char. The liquid phase demineralization can be performed by, for example, immersing the plant raw material or plant-derived char in an acidic solution. The acidic solution is a mixture of an acid and an aqueous solution. The acid is not particularly limited, and examples thereof include an aqueous solution of a mineral acid such as hydrochloric acid or sulfuric acid, or an organic acid such as acetic acid, butyric acid, or citric acid. The acid used is preferably an organic acid from the viewpoint of avoiding any unnecessary ion from remaining in the object to be demineralized, and is more preferably acetic acid and/or citric acid from the viewpoint of economic performance such as the efficiency of demineralization or the price of the acid, and relative ease of liquid waste disposal after use. Examples of the aqueous solution include water, and a mixture of water and a water-soluble organic solvent. Examples of the water-soluble organic solvent include alcohols such as methanol, ethanol, propylene glycol, and ethylene glycol.

The acid concentration in the acidic solution is not particularly limited, and the acid concentration has an influence on the demineralization rate and thus is preferably in a range of 0.001 to 1 M, more preferably in a range of 0.002 to 0.9 M, further preferably in a range of 0.005 to 0.5 M. The amount of the acidic solution used is also not particularly limited and is preferably an amount so that the plant raw material or plant-derived char to be immersed is soaked in the acidic solution, and, for example, the mass of the acidic solution relative to the mass of the plant raw material or plant-derived char to be immersed is preferably 100 to 1000% by mass, more preferably 200 to 900% by mass, further preferably 250 to 800% by mass.

The temperature of the liquid phase demineralization may be determined depending on the plant raw material or plant-derived char being demineralized, and may be, for example, 10 to 120°C, preferably 20 to 100°C, more preferably 25 to 95°C. When the demineralization temperature is in the range, demineralization can be efficiently performed with suppression of a reduction in carbon content due to hydrolysis of an organic substance constituting a plant.

The time of the liquid phase demineralization is not particularly restricted, may be, for example, 0.1 to 100 hours, preferably 0.2 to 50 hours, more preferably 0.5 to 20 hours. The liquid phase demineralization may be performed with the plant raw material or plant-derived char being continuously immersed in the acidic solution, or may be performed in multiple portions with the acidic solution used in the demineralization being renewed. In a case where the liquid phase demineralization is performed in multiple portions, the total demineralization time is defined as the time of the liquid phase demineralization.

The apparatus used in the liquid phase demineralization is not particularly limited as long as it is an apparatus in which the plant raw material or plant-derived char can be immersed in the acidic solution. For example, a stirring tank made of a glass lining can be used.

The gas phase demineralization may be carried out with any form of the plant raw material or plant-derived char. The gas phase demineralization can be performed by, for example, heat-treating the plant raw material or plant-derived char in a gas phase containing a halogen compound. The halogen compound is not particularly limited, and examples thereof include fluorine, chloride, bromine, iodine, hydrogen fluoride, hydrogen chloride, hydrogen bromide, iodine bromide, chlorine fluoride (ClF), iodine chloride (ICl), iodine bromide (IBr), and bromine chloride (BrCl). A compound generating the halogen compound by pyrolysis or a mixture thereof can also be used. The halogen compound is preferably hydrogen chloride from the viewpoint of feed stability and stability of the halogen compound used.

The gas phase demineralization may be performed in a gas phase in which the halogen compound and an inert gas are mixed. The inert gas is not particularly restricted as long as it is a gas not reactive with the substance to be demineralized (plant raw material or plant-derived char) and the plant raw material or plant-derived char after the demineralization, at the demineralization temperature. Examples include nitrogen, helium, argon, krypton, or a mixed gas thereof. The inert gas is preferably nitrogen from the viewpoint of feed stability and economic performance.

In a case where the gas phase demineralization is performed in the gas phase in which the halogen compound and the inert gas are mixed, the mixing ratio between the halogen compound and the inert gas is not particularly limited as long as sufficient demineralization can be achieved. For example, the amount of the halogen compound relative to the inert gas is preferably 0.01 to 10.0% by volume, more preferably 0.05 to 8.0% by volume, further preferably 0.1 to 5.0% by volume.

The temperature of the gas phase demineralization may be determined depending on the plant raw material or plant-derived char to be demineralized, and may be, for example, 500 to 1100°C, preferably 600 to 1050°C, more preferably 650 to 1000°C, further preferably 850 to 1000°C. If the demineralization temperature is too low, demineralization efficiency may be reduced and no sufficient demineralization may be possible. If the demineralization temperature is too high, activation with the halogen compound may occur.

The time of the gas phase demineralization is not particularly restricted, and is, for example, 5 to 300 minutes, preferably 10 to 200 minutes, more preferably 15 to 150 minutes.

The amount of the gas phase fed in the gas phase demineralization (amount of flow) is not particularly limited, and is, for example, preferably 1 ml/min or more, more preferably 5 ml/min or more, further preferably 10 ml/min or more per g of the plant raw material or plant-derived char.

The apparatus used in gas phase demineralization is not particularly limited as long as it is an apparatus in which the plant raw material or plant-derived char and the gas phase including the halogen compound can be heated under mixing. For example, there can be used a continuous or batch-type intra-layer flow type apparatus with a fluidized bed, in which a fluidized furnace is used.

In a case where the gas phase demineralization is performed, heat treatment in the absence of the halogen compound may be further performed after heat treatment in the gas phase including the halogen compound. The plant raw material or plant-derived char usually includes halogen by heat treatment in the gas phase including the halogen compound. Such halogen included in the plant raw material or plant-derived char can be removed by heat treatment in the absence of the halogen compound. For example, such halogen can be removed by performing heat treatment with blocking of feed of the halogen compound after the heat treatment in the gas phase including the halogen compound. Specifically, the heat treatment in the absence of the halogen compound may be performed by heat treatment at 500°C to 1100°C, preferably 600 to 1050°C, more preferably 650 to 1000°C, further preferably 850 to 1000°C in an inert gas atmosphere containing no halogen compound. The temperature of the heat treatment in the absence of the halogen compound is preferably equal to or higher than the temperature of the heat treatment in the gas phase including the halogen compound. The time of the heat treatment in the absence of the halogen compound is also not particularly limited, and is preferably 5 minutes to 300 minutes, more preferably 10 minutes to 200 minutes, further preferably 10 minutes to 100 minutes.

The liquid phase demineralization and gas phase demineralization in the present embodiment is treatment for removal of the ash such as potassium and iron included in the plant raw material or plant-derived char. The content of a potassium element in the carbon precursor obtained after liquid phase demineralization treatment or gas phase demineralization treatment is preferably 1000 ppm (0.1% by mass) or less, more preferably 500 ppm or less, further preferably 300 ppm or less. The content of an iron element in the carbon precursor obtained after liquid phase demineralization treatment or gas phase demineralization treatment is preferably 200 ppm or less, more preferably 150 ppm or less, further preferably 100 ppm or less. The content of a potassium element and the content of an iron element in the carbon precursor are preferably respectively equal to or less than the upper limits in terms of enhancements in performance and reliability of a power storage element such as a lithium-ion secondary battery, because elution of impurities into the electrolytic solution in dedoping can be reduced in the case of use of the resulting hardly graphitizable carbonaceous material in the electrode of the present invention.

In order that the resulting hardly graphitizable carbonaceous material has a desired particle size, a pulverization step of pulverizing the carbon precursor and/or the carbon precursor after heat treatment described below may be, if necessary, carried out, and also a classification step is preferably carried out in a case where the pulverization step is carried out. In the pulverization step, the carbon precursor and/or the carbon precursor after heat treatment are/is preferably pulverized so that the average particle size after temperature rise and/heat treatment step is a desired particle size, from the viewpoint of handleability.

The carbon precursor is shrunk by about 0 to 20% depending on conditions of temperature rise and/or heat treatment step(s) described below. Thus, in a case where the carbon precursor before temperature rise and/or heat treatment step(s) is pulverized, the average particle size of the carbon precursor is preferably prepared so as to be a particle size larger by about 0 to 20% than a desired average particle size of the hardly graphitizable carbonaceous material.

The carbon precursor is not dissolved during temperature rise and/or heat treatment step(s) described below, and thus the order of the pulverization step is not particularly limited. The pulverization step is preferably applied to the carbon precursor before temperature rise and/or heat treatment step(s) from the viewpoint of suppression of a reduction in specific surface area of the hardly graphitizable carbonaceous material and surface oxidation due to pulverization.

The pulverizer used in the pulverization step is not particularly limited, and, for example, a jet mill, a ball mill, a hammer mill, or a rod mill can be used. A jet mill provided with a classification mechanism is preferred from the viewpoint of less generation of a fine powder. In a case where a ball mill, a hammer mill, a rod mill, or the like is used, a fine powder can be removed by performing classification after the pulverization step.

Such pulverization may be any of wet pulverization and dry pulverization. Preferred is dry pulverization because post-treatment such as drying after such pulverization is not needed.

The classification step enables the average particle size of the hardly graphitizable carbonaceous material to be more certainly prepared. For example, a particle having a particle size of less than 1 $\mu$m can be removed.

In a case where the particle having a particle size of less than 1 $\mu$m is removed by classification, the content of the particle having a particle size of less than 1 $\mu$m in the hardly graphitizable carbonaceous material is preferably 3.0% by volume or less. Such removal of the particle having a particle size of less than 1 $\mu$m is not particularly limited as long as it is performed after pulverization, and is preferably performed at the same time as classification in pulverization. The content of the particle having a particle size of less than 1 $\mu$m in the carbonaceous material in the present invention is preferably 3.0% by volume or less, more preferably 2.5% by volume or less, further preferably 2.0% by volume or less from the viewpoint of a reduction in specific surface area and a reduction in irreversible capacity.

The classification method is not particularly restricted and examples thereof may include classification with a sieve, wet classification, and dry classification. Examples of a wet classifier may include a classifier based on the principle of gravity classification, inertia classification, hydraulic classification, centrifugal classification, or the like. Examples of a dry classifier may include a classifier based on the principle of sedimentation classification, mechanical classification, centrifugal classification, or the like.

The pulverization step and the classification step can also be carried out with one apparatus. For example, the pulverization step and the classification step can be carried out with a jet mill provided with a dry classification mechanism. Furthermore, an apparatus in which a pulverizer and a classifier are independent can also be used. In this case, pulverization and classification can also be continuously performed, or pulverization and classification can also be discontinuously performed.

In order that a hardly graphitizable carbonaceous material having a desired average particle size is obtained, two or more of such carbon precursors or carbon precursors after heat treatment (carbonaceous materials) having specified different average particle sizes, undergoing the pulverization step and optionally the classification step, can be mixed.

In the present invention, the specific surface area of the carbon precursor (the specific surface area after the pulverization step in the case of application of the pulverization step to the carbon precursor) is preferably 500 m$^2$/g or less, more preferably 450 m$^2$/g or less. When the specific surface area of the carbon precursor is equal to or less than the upper limit value, modification by a volatile substance in temperature rise and/or heat treatment step(s) described below is sufficiently performed, and a suitable hardly graphitizable carbonaceous material for the electrode of the present invention is easily obtained. The lower limit value of the specific surface area of the carbon precursor is not particularly limited, and is usually 25 m$^2$/g or more. The specific surface area of the carbon precursor can be adjusted to be equal to or less than the upper limit value by appropriate adjustment of the calcination temperature or time, or an atmosphere in which calcination is performed. The specific surface area of the carbon precursor can be measured with, for example, the BET method.

[Temperature rise step]

In one aspect of the present invention, production of the hardly graphitizable carbonaceous material includes, for example, a step of raising the temperature of a carbon precursor having a BET specific surface area of 500 m$^2$/g or less, to 900°C, and the rate of temperature rise between 600°C or more and 900°C or less in the step is preferably 60°C/min or less. The temperature rise step is preferably performed in the presence of a volatile organic substance. The carbon precursor and the volatile organic substance are heated to 600 to 900°C at a rate of temperature rise of less than 60°C/min, and thus the volatile organic substance is gradually volatilized and a volatile substance derived from the volatile organic substance remains in the system, thereby allowing modifying of a surface of the carbon precursor to be sufficiently easily performed.

The volatile organic substance is preferably an organic substance having a residual carbon ratio of less than 5% by mass, and is preferably an organic substance having a residual carbon ratio of less than 5% by mass when in mineralized at 800°C. The volatile organic substance is preferably an volatile substance (for example, a hydrocarbon-based gas, or tar) capable of reducing the BET specific surface area of the carbon precursor. The content of the volatile substance (for example, hydrocarbon-based gas, or a tar components) capable of reducing the BET specific surface area, in the volatile organic substance, is not particularly limited, and is preferably 10% by mass or more from the viewpoint of stable running of an instrument used. The upper limit of the content of such a volatile component is not particularly limited, and is preferably 95% by mass or less, more preferably 80% by mass or less, further preferably 50% by mass or less from the viewpoint of suppression of generation of a tar components in the instrument. The content of the volatile component is calculated from the ignition residue after heat treatment of a sample in an inert gas, and the loading amount. As for the heat treatment, about 1 g of the volatile organic substance (the precise mass thereof is defined

as $W_0$(g)) is placed in a crucible, and the crucible is heated to 800°C at 10°C /min in an electric furnace while flowing 20 liters of nitrogen per minute, followed by heat treatment for 1 hour at 800°C. The residue at this time is defined as the ignition residue, and the mass thereof is defined as W(g). The volatile component P(%) is calculated from the following formula.

[Formula 1]

$$P = \frac{W_0 - W}{W_0}$$

Examples of the volatile organic substance include a thermoplastic resin and a low-molecular-weight organic compound. Specific examples of the thermoplastic resin may include polystyrene, polyethylene, polypropylene, poly(meth)acrylic acid, and poly(meth)acrylate. Herein, (meth)acrylic is a collective term of acrylic and methacrylic. Examples of the low-molecular-weight organic compound may include toluene, xylene, mesitylene, styrene, naphthalene, phenanthrene, anthracene, and pyrene. One is preferred which is volatilized within the range of the raised temperature and which does not oxidize or activate a surface of the carbon precursor when thermally decomposed, and thus the thermoplastic resin is preferably polystyrene, polyethylene, or polypropylene. The low-molecular-weight organic compound is preferably low in volatility under ordinary temperature from the viewpoint of safety, and is preferably naphthalene, phenanthrene, anthracene, pyrene, or the like.

In one aspect of the present invention, examples of the thermoplastic resin may include an olefin-based resin, a styrene-based resin, and a (meth)acrylic acid-based resin. Examples of the olefin-based resin may include polyethylene, polypropylene, a random copolymer of ethylene and propylene, and a block copolymer of ethylene and propylene. Examples of the styrene-based resin may include polystyrene, poly($\alpha$-methylstyrene), and a copolymer of styrene and alkyl (meth)acrylate (the alkyl group has 1 to 12 carbon atoms, preferably 1 to 6 carbon atoms). Examples of the (meth)acrylic acid-based resin may include polyacrylic acid, polymethacrylic acid, and an alkyl (meth)acrylate polymer (the alkyl group has 1 to 12 carbon atoms, preferably 1 to 6 carbon atoms).

In one aspect of the present invention, for example, a hydrocarbon compound having 1 to 20 carbon atoms may be used as the low-molecular-weight organic compound. The number of carbon atoms in the hydrocarbon compound is preferably 2 to 18, more preferably 3 to 16. The hydrocarbon compound may be a saturated hydrocarbon compound or an unsaturated hydrocarbon compound, and may be a linear hydrocarbon compound or a cyclic hydrocarbon compound. In the case of the unsaturated hydrocarbon compound, the unsaturated bond may be a double bond or a triple bond, and the number of unsaturated bonds contained in one molecule is also not particularly limited. For example, the linear hydrocarbon compound is an aliphatic hydrocarbon compound, and examples thereof may include a straight or branched alkane, alkene, or alkyne. Examples of the cyclic hydrocarbon compound may include an alicyclic hydrocarbon compound (for example, cycloalkane, cycloalkene, or cycloalkyne) or an aromatic hydrocarbon compound. Specific examples of the aliphatic hydrocarbon compound may include methane, ethane, propane, butane, pentane, hexane, octane, nonane, decane, ethylene, propylene, butene, pentene, hexene or acetylene. Examples of the alicyclic hydrocarbon compound may include cyclopentane, cyclohexane, cycloheptane, cyclooctane, cyclononane, cyclopropane, cyclopentene, cyclohexene, cycloheptene, cyclooctene, decalin, norbornene, methylcyclohexane, or norbornadiene. Furthermore, examples of the aromatic hydrocarbon compound may include a monocyclic aromatic compound such as benzene, toluene, xylene, mesitylene, cumene, butylbenzene, styrene, $\alpha$-methylstyrene, o-methylstyrene, m-methylstyrene, p-methylstyrene, vinyl xylene, p-tert-butylstyrene, or ethylstyrene, or a 3- to 6-rings condensed polycyclic aromatic compound such as naphthalene, phenanthrene, anthracene, or pyrene, preferably a condensed polycyclic aromatic compound, more preferably naphthalene, phenanthrene, anthracene or pyrene. The hydrocarbon compound may have any substituent. The substituent is not particularly limited, and examples thereof may include an alkyl group having 1 to 4 carbon atoms (preferably an alkyl group having 1 to 2 carbon atoms), an alkenyl group having 2 to 4 carbon atoms (preferably an alkenyl group having 2 carbon atoms), or a cycloalkyl group having 3 to 8 carbon atoms (preferably a cycloalkyl group having 3 to 6 carbon atoms).

The volatile organic substance is preferably a solid at ordinary temperature, and, for example, more preferably a thermoplastic resin in the form of a solid at ordinary temperature, such as polystyrene, polyethylene or polypropylene, or a low-molecular-weight organic compound in the form of a solid at ordinary temperature, such as naphthalene, phenanthrene, anthracene or pyrene. One is preferred which does not oxidize or activate a surface of the carbon precursor when volatilized and pyrolyzed in the temperature range of temperature rise, and thus the thermoplastic resin is preferably any of an olefin-based resin and a styrene-based resin, more preferably any of polystyrene, polyethylene and polypropylene. The low-molecular-weight organic compound is preferably a hydrocarbon compound having 1 to 20 carbon atoms, more preferably a condensed polycyclic aromatic compound, further preferably naphthalene, phenanthrene, anthracene or pyrene from the viewpoint of safety. The thermoplastic resin is preferably an olefin-based resin, more preferably a styrene-based resin, further preferably polystyrene, polyethylene, or polypropylene, particularly preferably polystyrene or polyethylene from the viewpoint of the residual carbon ratio.

The residual carbon ratio is determined by quantitatively determining the amount of carbon in the ignition residue after heat treatment of a sample in an inert gas. The heat treatment is performed by putting about 1g of the volatile organic substance (this precise mass thereof is defined as Wi(g)) in a crucible, heating the crucible from normal temperature to 800°C at a heating rate of 10°C/min in an electric furnace while flowing 20 liters of nitrogen per minute, and then igniting at 800°C for 1 hour. The residue at this time is defined as an ignition residue, and the mass thereof is defined as $W_2$ (g).

Next, the ignition residue is subjected to elemental analysis according to a method prescribed in JIS M8819, and the mass proportion Pi (% by mass) of carbon is measured. The residual carbon ratio $P_2$ (% by mass) is calculated from the following formula.

[Formula 2]

$$P_2 = P_1 \times \frac{W_2}{W_1}$$

The method for raising the temperatures of the carbon precursor and the volatile organic substance is not particularly limited, and the carbon precursor and the organic substance may be mixed in advance before temperature rise, or the carbon precursor and the volatile organic substance may be placed separately in a temperature rise system. A mode of mixing in advance is preferred because a surface of the carbon precursor is easily uniformly modified.

The mixing of the carbon precursor and the volatile organic substance may be performed either before or after the pulverization step.

In the case of mixing before the pulverization step, pulverization and mixing can be simultaneously performed by feeding simultaneously the carbon precursor and the volatile organic substance being metered, to a pulverization apparatus.

In the case of mixing after the pulverization step, a known mixing method can be used as the mixing method as long as it is a procedure in which both are uniformly mixed. The volatile organic substance, when is a solid at ordinary temperature, is preferably mixed in the form of a particle, and the shape of the particle and the particle size are not particularly limited. The average particle size of the volatile organic substance is preferably 0.1 to 2000 μm, more preferably 1 to 1000 μm, further preferably 2 to 600 μm from the viewpoint of uniform dispersion of the volatile organic substance in the carbon precursor pulverized.

The mixture may include any component other than the carbon precursor and the volatile organic substance. For example, natural graphite, artificial graphite, a metallic material, an alloy-based material, or an oxide-based material may be included. The content of such other component is not particularly limited, and is preferably 50 parts by mass or less, more preferably 30 parts by mass or less, further preferably 20 parts by mass or less, particularly preferably 10 parts by mass or less based on 100 parts by mass of the mixture of the carbon precursor and the volatile organic substance.

The mass ratio between the carbon precursor and the volatile organic substance in the temperature rise system is not particularly limited, and the mass ratio between the carbon precursor and the volatile organic substance is preferably 97:3 to 40:60, more preferably 95:5 to 60:40, further preferably 93:7 to 80:20. When the volatile organic substance is in an amount of 3 parts by mass or more, modification is sufficiently easily performed. On the other hand, a too large amount of the volatile organic substance is not preferred because excess reaction occurs on a powder surface and a massive object is easily produced.

The rate of temperature rise in the temperature rise step from 600 to 900°C is preferably 60°C/min or less, more preferably less than 60°C/min, further preferably 50°C/min or less, still more preferably 40°C/min or less, particularly preferably 30°C/min or less, more particularly preferably 20°C/min or less, extremely preferably 10°C/min or less. The lower limit of the rate of temperature rise is usually 5°C/min or more. If the rate of temperature rise is 60°C/min or more, the rate of volatilization of the volatile organic substance is high and the volatile substance hardly remains, and thus modification of a surface of the carbon precursor cannot be sufficiently performed. The reaction time in the temperature rise step from 600 to 900°C, when converted from the rate of temperature rise, is preferably 5 minutes or more, more preferably more than 5 minutes, further preferably 6 minutes or more, still more preferably 7.5 minutes or more, particularly preferably 10 minutes or more, more particularly preferably 15 minutes or more, extremely preferably 30 minutes or more.

The rate of temperature rises from the starting temperature (for example, room temperature) to 600°C is not particularly limited, and is preferably 5 to 300°C/min, more preferably 10 to 60°C/min from a commercial viewpoint.

Any apparatus usually used for production of a carbonaceous material can be used as the temperature rise apparatus. Examples of such an apparatus include a circulation type dryer, an oven, or a rotary kiln. The mixture may also be heated with appropriate stirring for a uniform temperature rise.

The temperature rise step can be performed in an inert gas atmosphere. Examples of the inert gas may include nitrogen or argon. The temperature rise step can be carried out under atmospheric pressure or under reduced pressure, and when carried out under reduced pressure, can be performed at, for example, 10 kPa or less.

[Heat treatment step]

A suitable hardly graphitizable carbonaceous material for the configuration of the electrode of the present invention can also be produced by a method including a step of heat-treating a carbon precursor having a BET specific surface area of 500 $m^2$/g or less in the presence of a volatile substance derived from a volatile organic substance at a temperature of 600°C or more and less than 900°C for more than 5 minutes.

The volatile substance derived from a volatile organic substance is any of a gas formed by volatilization of the volatile organic substance, and a substance capable of reducing the BET specific surface area of a carbon precursor generated by pyrolysis of the volatile organic substance. Specifically, for example, the gas formed by volatilization of the volatile organic substance can be a hydrocarbon compound having 1 to 20 carbon atoms. The number of carbon atoms in the hydrocarbon compound is preferably 2 to 18, more preferably 3 to 16. The hydrocarbon compound may be a saturated hydrocarbon compound or an unsaturated hydrocarbon compound, and may be a linear hydrocarbon compound or a cyclic hydrocarbon compound. In the case of the unsaturated hydrocarbon compound, the unsaturated bond may be a double bond or a triple bond, and the number of unsaturated bonds contained in one molecule is also not particularly limited. For example, the linear hydrocarbon compound is an aliphatic hydrocarbon compound, and examples thereof may include a straight or branched alkane, alkene, or alkyne. Examples of the cyclic hydrocarbon compound may include an alicyclic hydrocarbon compound (for example, cycloalkane, cycloalkene, or cycloalkyne) or an aromatic hydrocarbon compound. Specific examples of the aliphatic hydrocarbon compound may include methane, ethane, propane, butane, pentane, hexane, octane, nonane, decane, ethylene, propylene, butene, pentene, hexene or acetylene. Examples of the alicyclic hydrocarbon compound may include cyclopentane, cyclohexane, cycloheptane, cyclooctane, cyclononane, cyclopropane, cyclopentene, cyclohexene, cycloheptene, cyclooctene, decalin, norbornene, methylcyclohexane, or norbornadiene. Furthermore, examples of the aromatic hydrocarbon compound may include a monocyclic aromatic compound such as benzene, toluene, xylene, mesitylene, cumene, butylbenzene, styrene, α-methylstyrene, o-methylstyrene, m-methylstyrene, p-methylstyrene, vinyl xylene, p-tert-butylstyrene, or ethylstyrene, or a 3- to 6-rings condensed polycyclic aromatic compound such as naphthalene, phenanthrene, anthracene, or pyrene. From the viewpoint of reactivity with the carbon precursor, and handleability, a monocyclic aromatic compound such as benzene, toluene, xylene, mesitylene, cumene, butylbenzene, styrene, α-methylstyrene, o-methylstyrene, m-methylstyrene, p-methylstyrene, vinyl xylene, p-tert-butylstyrene, or ethylstyrene is more preferred.

The concentration of the volatile substance in the heat treatment system is preferably 1.0% by volume or more, more preferably 1.5% by volume or more, further preferably 5% by volume or more, and preferably 95% by volume or less, more preferably 85% by volume or less, further preferably 75% by volume or less. When the concentration of the volatile substance is in the range, modification of the carbon precursor is sufficiently made and the influence on a heat treatment instrument is easily smaller.

Examples of any gas other than the volatile substance included in the heat treatment system include an inert gas, and specific examples thereof may include nitrogen or argon. The heat treatment step may be carried out under atmospheric pressure or under reduced pressure. When performed under reduced pressure, it can be performed at, for example, 10 kPa or less.

The heat treatment step may be performed by the steps, for example, placing only the volatile organic substance in a furnace alone and then heating, filling the system with a gaseous volatile substance derived from the volatile organic substance and then placing the carbon precursor in the system to react, or may be performed by introducing the gaseous volatile substance into the reaction system in which the carbon precursor is present. This heat treatment step is characterized in that the gaseous volatile substance reacts with the carbon precursor. By reacting the carbon precursor with the gaseous volatile substance, the carbon precursor is easily sufficiently modified by the volatile substance.

The temperature in the present heat treatment step carried out is preferably 600°C or more, more preferably 650°C or more, and is preferably less than 900°C, more preferably 850°C or less. When the heat treatment temperature is in the range, structure construction hardly progresses excessively and thus pore growth is easily suppressed.

The heat treatment time is usually more than 5 minutes, preferably 15 minutes or more, more preferably 30 minutes or more. A constant temperature in the above range may be adopted, or a change in temperature in the above range may also be made. In the case of the change in temperature, the rate of the change is preferably less than 60°C/min, more preferably 30°C/min or less.

Any apparatus usually used for production of a carbonaceous material can be used as the apparatus for rising temperature. Examples of such an apparatus include a circulation type dryer, an oven, or a rotary kiln. The carbon precursor may also be heated with appropriate stirring so that modification by the volatile substance uniformly occurs.

[Additional heat treatment step]

In the production of the hardly graphitizable carbonaceous material, a step of heat treatment at 900°C or more and 1180°C or less may be further performed after the temperature rise step and/or the heat treatment step.

The temperature of the additional heat treatment step is preferably 900°C or more, more preferably 1000°C or more, and preferably 1180°C or less, more preferably 1100°C or less. When the temperature of the additional heat treatment is in the range, a hardly graphitizable carbonaceous material high in discharge capacity is easily obtained. In one aspect of the present invention, in a case where such a temperature rise is carried out in the absence of the volatile organic substance and the volatile substance, the lower limit of the temperature of the additional heat treatment step is preferably more than 1100°C, more preferably 1140°C or more.

The time of the additional heat treatment step is preferably 10 minutes or more, more preferably 20 minutes or more, and preferably 350 minutes or less, more preferably 120 minutes or less, further preferably 60 minutes or less. When the time of the additional heat treatment step is in the range, a hardly graphitizable carbonaceous material high in discharge capacity is easily obtained.

The additional heat treatment step can be performed in an inert gas atmosphere as in the temperature rise step and the heat treatment step. Examples of the inert gas may include nitrogen or argon. This temperature rise step can be carried out under atmospheric pressure or under reduced pressure, and when carried out under reduced pressure, can be performed at, for example, 10 kPa or less.

The additional heat treatment step may be continuously performed after the temperature rise step and/or the heat treatment step, or may be performed after cooling once.

<Graphite>

The electrode of the present invention contains graphite. In the present invention, artificial graphite, natural graphite, and such graphite covered with a non-graphitic carbonaceous material such as pitch-derived carbon may be used as the graphite. Artificial graphite is excellent in lifetime in charge/discharge repeated, and is widely used in an in-car battery expected to be used for a long period. Natural graphite is relatively inexpensive, and is characterized by being secondarily excellent in receiving performance of a lithium ion because carbon covering is essential for suppression of irreversible reaction with an electrolytic solution. Natural graphite provides a more flexible particle than artificial graphite, and thus is easily formed into a high-density electrode and is utilized in an in-car battery in which the energy density per volume is demanded. Such graphite used can be appropriately selected from those conventionally known in the art, or those can also be mixed and used. Natural graphite is preferred from the viewpoint of availability and price, artificial graphite is preferred from the viewpoint of long-term stability of charge/discharge characteristics, and graphite covered with a non-graphitic carbonaceous material is preferred from the viewpoint of receiving performance of a lithium ion.

In one aspect of the present invention, the volumetric average particle size ($D_{50}$) of the graphite, by a laser diffraction method, is preferably 1.5 $\mu$m or more and 50 $\mu$m or less, more preferably 8 $\mu$m or more, further preferably 10 $\mu$m or more, and more preferably 40 $\mu$m or less, further preferably 30 $\mu$m or less. The average particle size of the graphite is controlled so as to satisfy a particle size ratio described below in a relationship with the average particle size of the non-graphitic carbonaceous material used in combination, thus the non-graphitic carbonaceous material can be entirely dispersed in the electrode and an increase in density can be achieved, and therefore a high energy density per volume is obtained. The volumetric average particle size ($D_{50}$) can be determined by, for example, a method described in Examples.

The content of the non-graphitic carbonaceous material in the electrode of the present invention is preferably 1 part by mass or more and 45 parts by mass or less based on 100 parts by mass of the graphite. When the content of the non-graphitic carbonaceous material in the electrode is equal to or more than the lower limit, a storage site of a lithium ion can be sufficiently ensured, and deposition of metallic lithium can be effectively suppressed even in an overcharge state. When the content of the non-graphitic carbonaceous material is equal to or less than the upper limit, a high electrode density is achieved and the energy density per volume can be sufficiently kept. In one aspect of the present invention, the content of the non-graphitic carbonaceous material is more preferably 2 parts by mass or more, further preferably 3 parts by mass or more, particularly preferably 5 parts by mass or more, and more preferably 40 parts by mass or less, further preferably 35 parts by mass or less, particularly preferably 30 parts by mass or less, further particularly preferably 25 parts by mass or less, especially preferably 20 parts by mass or less based on 100 parts by mass of the graphite. The content of the non-graphitic carbonaceous material can be in a range of any combination of the lower limit and the upper limit.

The total amount of the graphite and the non-graphitic carbonaceous material is usually 90 to 99% by mass, preferably 93 to 98% by mass, more preferably 95 to 97% by mass based on an electrode mixture for formation of an electrode, of the graphite, the non-graphitic carbonaceous material, and a binding agent and, if necessary, a conductive aid and/or the like described below.

The ratio of the volumetric average particle size ($D_{50}$) of the non-graphitic carbonaceous material by a laser diffraction method and the volumetric average particle size ($D_{50}$) of the graphite by a laser diffraction method (particle size of non-graphitic carbonaceous material/particle size of graphite) in the electrode of the present invention is preferably 0.20 or more and 0.80 or less. When the particle size ratio between the non-graphitic carbonaceous material and the graphite is in the above range, the non-graphitic carbonaceous material can be entirely dispersed in the electrode and an increase in density can be achieved. Thus, a high energy density per volume is obtained. The particle size ratio is more preferably 0.25 or more, further preferably 0.27 or more, particularly preferably 0.30 or more, and more preferably 0.75 or less, further preferably 0.70 or less, particularly preferably 0.60 or less. The average particle size ratio can be in a range of any combination of the lower limit and the upper limit.

<Binding agent>

The electrode of the present invention contains a binding agent (binder). The binding agent is not particularly limited as long as it does not react with an electrolytic solution. Examples may include PVDF (polyvinylidene fluoride), polytetrafluoroethylene, SBR (styrene-butadiene rubber), NBR (acrylonitrile-butadiene rubber), acrylic rubber, hydroxyethylcellulose, CMC (carboxymethylcellulose), and a mixture thereof. In particular, a mixture of SBR and CMC is preferred because SBR and CMC attached to an active material surface less inhibit lithium ion transfer and good input/output characteristics are obtained.

The content of the binding agent in the electrode of the present invention may be appropriately determined depending on the type of the binding agent used. In one aspect of the present invention, the content of the binding agent is, for example, preferably 1 to 5% by mass, more preferably 2 to 4% by mass based on the total mass of the electrode mixture. When the content of the binding agent is in the range, binding between particles of materials constituting the electrode, and binding between such a particle and a current collecting plate are easily increased, the internal resistance of the resulting electrode is hardly increased, the proportion of an active material in the electrode mixture volume is sufficiently high, and good battery characteristics can be obtained. In a case where the binding agent is used in combination of two or more kinds thereof, the total amount thereof is preferably in the above content range.

The electrode of the present invention may contain, for example, a conductive aid and/or an additive commonly used for electrode formation, in addition to the graphite, the non-graphitic carbonaceous material, and the binding agent. The conductive aid can be used to impart higher conductivity. Examples of the conductive aid include conductive carbon black, a vapor-grown carbon fiber (VGCF), and a nanotube. The amount of the conductive aid added may be determined depending on the type of the conductive aid used, and is preferably 0.1 to 2% by mass, more preferably 0.5 to 1.5% by mass based on the total mass of the electrode mixture. When the amount of the conductive aid added is in the range, the proportion of an active material in the electrode mixture volume is sufficiently high, conductivity is easily enhanced, and dispersion of the conductive aid in the electrode mixture is also improved.

The electrode mixture can be obtained by adding the graphite, the non-graphitic carbonaceous material, the binding agent, optionally the conductive aid, and an appropriate solvent in appropriate amounts and kneading them.

The solvent may be appropriately selected depending on the types of electrode materials used (in particular, binding agent). The solvent may be used singly or in combination of two or more thereof. For example, in a case where SBR or the like is used as the binding agent, the binding agent may be used in the form of an aqueous emulsion. In a case where CMC (carboxymethylcellulose) is used as the binding agent, the binding agent may be dissolved in a solvent such as water and then used. In a case where PVDF is used as the binding agent, it is preferred that a polar solvent such as N-methylpyrrolidone (NMP) is used from the viewpoint of dissolving PVDF to easily provide a slurry.

The electrode of the present invention can be produced by applying the electrode mixture onto a current collecting plate to form an electrode active material layer on the current collecting plate. The electrode active material layer can be formed by, for example, applying the electrode mixture onto a current collecting plate, and drying and pressure-molding the resultant. The current collecting plate used may be, for example, a metal plate.

The electrode active material layer is basically formed on each of both surfaces of the current collecting plate, and may be, if necessary, formed on one surface thereof. A thicker electrode active material layer allows the current collecting plate, a separator, and the like to be less used, and thus is preferable for an increase in capacity. However, a larger electrode area facing a counter electrode is more favorable for enhancements in input/output characteristics, and thus a too thick electrode active material layer may deteriorate input/output characteristics. A preferred thickness of the active material layer (per one surface) is 10 to 500 $\mu$m, more preferably 20 to 280 $\mu$m, particularly preferably 20 to 80 $\mu$m from the viewpoint of output in battery discharge.

<Power storage element>

The electrode of the present invention can be suitably used for, for example, power storage elements such as non-aqueous electrolyte batteries such as a lithium-ion secondary battery, a potassium-ion secondary battery, a lithium-sulfur battery, a lithium-air battery, an all-solid-state battery, a dual-carbon battery, and an organic radical battery. Therefore, the present invention is also directed to a power storage element including the electrode of the present invention. The electrode of the present invention is particularly suited as a negative electrode of a lithium-ion secondary battery.

For example, in a case where the electrode of the present invention is formed as a negative electrode for lithium-ion secondary batteries, other materials such as a positive electrode material, a separator and an electrolytic solution are not particularly limited, and various materials conventionally used or proposed as those for lithium-ion secondary batteries can be used.

For example, the positive electrode material is preferably a layered oxide-based (represented by $LiMO_2$, M is metal: for example, $LiCoO_2$, $LiNiO_2$, $LiMnO_2$, or $LiNi_xCo_yMo_zO_2$ (where x, y, and z each represent a compositional ratio)), olivine-based (represented by $LiMPO_4$, M is a metal: for example, $LiFePO_4$), or spinel-based (represented by $LiM_2O_4$, M is a metal: for example, $LiMn_2O_4$) composite metal chalcogen compound, and such chalcogen compounds may be, if necessary, mixed. A positive electrode is formed by molding such a positive electrode material together with an appropriate binding agent and a carbonaceous material for imparting conductivity to the electrode, to form a layer on a conductive current collecting material.

A non-aqueous solvent-type electrolytic solution used in combination with such positive electrode and negative electrode is generally formed by dissolving an electrolyte in a non-aqueous solvent. As the non-aqueous solvent, for example, one or a combination of two or more of an organic solvent such as propylene carbonate, ethylene carbonate, dimethyl carbonate, diethyl carbonate, dimethoxyethane, diethoxyethane, $\gamma$-butyllactone, tetrahydrofuran, 2-methyltetrahydrofuran, sulfolane, or 1,3-dioxolane may be used. As the electrolyte, for example, $LiClO_4$, $LiPF_6$, $LiBF_4$, $LiCF_3SO_3$, $LiAsF_6$, $LiCl$, $LiBr$, $LiB(C_6H_5)_4$, or $LiN(SO_3CF_3)_2$ may be used.

A lithium-ion secondary battery is generally formed by facing a positive electrode and a negative electrode formed as described above to each other, if necessary, with a permeable separator made of a non-woven fabric, any other porous material, or the like being interposed, and immersing the resultant in the electrolytic solution. A permeable separator made of a non-woven fabric, any other porous material, or the like usually used for secondary batteries can be used as the separator. Alternatively, a solid electrolyte made of polymer gel impregnated with the electrolytic solution can also be used instead of the separator or together with the separator.

In a case where the lithium-ion secondary battery is pre-doped and then used, a pre-doping step of storing a metal ion in a negative electrode active material in the negative electrode in advance can be carried out before the positive electrode, the negative electrode, the separator, the electrolytic solution are combined to form a battery and the battery is initially charged.

The method for doping the negative electrode active material with a lithium ion is not particularly limited, and examples thereof include a method including dispersing the negative electrode active material and metallic lithium in the electrolytic solution to prepare a slurry and kneading and mixing the slurry prepared (in this case, the negative electrode active material can be doped with a lithium ion in an amount corresponding to the amount of metallic lithium added), or a method including sandwiching a stacked article in which a negative electrode active material layer made with the negative electrode active material, the separator, and a lithium metal layer (for example, lithium metal foil) are stacked in the listed order, with a pair of current collectors (for example, copper foil), externally shortening the negative electrode active material layer and the lithium metal layer of the stacked article with a known charge/discharge apparatus, and charging and electrochemically pre-doping the negative electrode active material layer.

[EXAMPLES]

Hereinafter, the present invention is specifically described with reference to Examples, but the scope of the present invention is not limited to these Examples. While measurement methods of physical property values of a carbonaceous material and electrodes are described below, physical property values described in the present description also including Examples are based on values determined by the following methods.

<Production of electrode and battery>

The following graphite a and graphite b, and non-graphitic carbonaceous materials A to F were used to produce electrodes and batteries of Examples and Comparative Examples.

(1) Graphite

Graphite a: artificial graphite, surface covered with carbon, $D_{50}$ = 16.0 $\mu$m
Graphite b: artificial graphite, surface not covered with carbon, $D_{50}$ = 14.8 $\mu$m
The volumetric average particle size ($D_{50}$) was measured by the following laser diffraction method.

(2) Non-graphitic carbonaceous material

Non-graphitic carbonaceous materials used were non-graphitic carbonaceous materials A to D prepared according to methods described below, and commercially available non-graphitic carbonaceous materials E and F.
Non-graphitic carbonaceous material A: hardly graphitizable carbon
Non-graphitic carbonaceous material B: hardly graphitizable carbon
Non-graphitic carbonaceous material C: hardly graphitizable carbon
Non-graphitic carbonaceous material D: hardly graphitizable carbon
Non-graphitic carbonaceous material E: commercially available, hardly graphitizable carbon
Non-graphitic carbonaceous material F: commercially available, easily graphitizable carbon

<Method for producing non-graphitic carbonaceous material A>

A nitrogen gas including 1% by volume of a hydrogen chloride gas was fed at a flow rate of 10 L/min, to 100 g of coconut shell char A (containing 98% by mass of a particle having a particle size of 0.850 to 2.360 mm) obtained by crushing a coconut shell and dry-distilling the shell at 500°C, these were treated at 950°C for 80 minutes, thereafter only feeding of the hydrogen chloride gas was stopped, and furthermore the resultant was heat-treated at 950°C for 30 minutes. Thereafter, the heat-treated product was roughly pulverized to an average particle size of 10 $\mu$m with a ball mill, and then pulverized with a compact jet mill ("CoJet system $\alpha$-mkIII" manufactured by SEISHIN ENTERPRISE Co., Ltd.). Furthermore, the pulverized product was classified with LABO CLASSIEL N-01 (manufactured by SEISHIN ENTERPRISE Co., Ltd.), and thus a carbon precursor having a BET specific surface area of 400 m$^2$/g and a volumetric average particle size of 4.8 $\mu$m was obtained.
With 9.1 g of the carbon precursor was mixed 0.9 g of polystyrene (manufactured by Sekisui Kasei Co., Ltd., average particle size 400 $\mu$m, residual carbon ratio 1.2% by mass). 10 g of the mixture was placed in a graphitic sheath so that the thickness of a sample layer was about 3 mm, and disposed in a high-speed temperature rise furnace manufactured by MOTOYAMA, and heated from 600°C to 900°C at a rate of temperature rise of 20°C/min (time of temperature rise: 15 minutes) and then heated to 1100°C at a rate of temperature rise of 60°C/min under a flow rate of 5 L/min of nitrogen. The mixture was raised in temperature at a rate of 60°C/min in any other temperature region. The mixture was raised in temperature to 1100°C and retained at that temperature for 20 minutes, and thereafter naturally cooled. After confirming that the temperature in the furnace had dropped to 200°C or less, a carbonaceous material (non-graphitic carbonaceous material A) was taken out from the furnace.

<Method for producing non-graphitic carbonaceous material B>

A carbonaceous material (non-graphitic carbonaceous material B) was obtained by the same treatment as in the method for producing the non-graphitic carbonaceous material A except that the rate of temperature rise from 600°C to 900°C was changed to 20°C/min (time of temperature rise: 15 minutes) and thereafter the temperature was raised to 1000°C at a rate of temperature rise of 60°C/min and then retained at this temperature for 20 minutes.

<Method for producing non-graphitic carbonaceous material C>

10 g of starch (corn starch), 1.16 g (0.15 mol relative to 1 mol of a starch monosaccharide unit) of melamine, and 0.76 g (0.08 mol relative to 1 mol of a starch monosaccharide unit) of adipic acid were placed in a sample bottle and shaken to obtain a mixture. The mixture obtained was raised in temperature to 600°C in a nitrogen gas atmosphere. The rate of temperature rise to 600°C was here 600°C/hour (10°C/min). Next, carbonization treatment was performed by heat treatment under a nitrogen gas stream at 600°C for 30 minutes, and thus carbide was obtained. The amount of the nitrogen gas fed was here 0.5 L/min per 10 g of starch. Thereafter, the carbide obtained was pulverized with a ball mill, and thus carbide pulverized, having a $D_{50}$ of 5.5 $\mu$m, was obtained. The obtained pulverized carbide was raised in temperature to 1100°C, and subjected to high-temperature calcination treatment corresponding to heat treatment at 1100°C for 60 minutes, and thus a carbonaceous material (non-graphitic carbonaceous material C) was obtained. The rate of temperature rise to 1100°C was here 600°C/hour (10°C/min). The above temperature rise and heat treatment were performed under a nitrogen gas stream. The amount of the nitrogen gas fed was 3 L/min per 5 g of the carbide pulverized.

<Method for producing non-graphitic carbonaceous material D>

A coconut shell was crushed and dry-distilled at 500°C, and thus coconut shell char having a particle size of 2.360 to 0.850 mm (containing 98% by weight of a particle having a particle size of 2.360 to 0.850 mm) was obtained. While a nitrogen gas including 1% by volume of a hydrogen chloride gas was fed at a flow rate of 10 L/min, to 100 g of the coconut shell char, gas phase demineralization treatment was carried out at 900°C for 50 minutes. Thereafter, only feeding of the hydrogen chloride gas was stopped, furthermore gas phase deoxidizing treatment was carried out at 900°C for 30 minutes with a nitrogen gas being fed at a flow rate of 10L/min, and thus a carbon precursor was obtained. The carbon precursor obtained was roughly pulverized to an average particle size of 10 $\mu$m with a ball mill, and then pulverized with a compact jet mill (CoJet system $\alpha$-mkIII manufactured by SEISHIN ENTERPRISE Co., Ltd.) and classified, and thus a carbon precursor having a volumetric average particle size 4.5 $\mu$m was obtained.

Mixed were 9.1 g of the carbon precursor and 0.9 g of polystyrene (manufactured by Sekisui Kasei Co., Ltd., average particle size 400 $\mu$m, residual carbon ratio 1.2%). 10 g of the mixture was placed in a sheath made of graphite (100 mm in length, 100 mm in width, 50 mm in height), raised in temperature to 1290°C at a rate of temperature rise of 60°C/min under a flow rate of 5 L/min of nitrogen in a high-speed temperature rise furnace manufactured by MOTOYAMA, and then retained for 23 minutes and naturally cooled. After confirming that the temperature in the furnace had dropped to 200°C or less, a carbonaceous material (non-graphitic carbonaceous material D) was taken out from the furnace. The amount of the carbonaceous material recovered was 8.1 g, and the recovery rate relative to the carbon precursor was 89%.

Each of the non-graphitic carbonaceous materials was measured with respect to the half-band width of a main peak in the powder X-ray diffraction measurement by CuK$\alpha$ ray, the average plane distance $d_{002}$ of the (002) plane, the pore volume, the Raman spectrum by laser Raman spectroscopy, the mesopore volume, the BET specific surface area, the content of nitrogen, the volumetric average particle size according to the following methods. The results are shown in Table 1.

<Average plane distance $d_{002}$ of (002) plane>

"MiniFlexII" manufactured by Rigaku Corporation was used, each of the non-graphitic carbonaceous materials used in Examples and Comparative Examples was packed in a sample holder, and an X-ray diffraction chart was obtained with CuK$\alpha$ ray monochromated by a Ni filter, as a radiation source. A peak position in a diffraction pattern was determined by a barycentric method (method including determining the barycenter position of a diffraction line and determining a peak position with the corresponding 2$\theta$ value), and was corrected with the diffraction peak of the (111) plane of a high-purity silicon powder for standard substances. The wavelength $\lambda$ of CuK$\alpha$ ray was assumed to be 0.15418 nm, and d002 was calculated by the following Bragg equation.

[Formula 3]

$$d_{002} = \frac{\lambda}{2 \cdot \sin\theta} \quad (Bragg\ equation)$$

<Half-band width of main peak>

The half-band width was determined as a full width at half maximum obtained by drawing a straight line to be touched from the underside of the chart, once in each of ranges of 2$\theta$ = 5° to 15° and 30° to 40°, onto the diffraction curve obtained, subtracting this line as the baseline, and then performing fitting to a main peak with the Gaussian function.

<Measurement of adsorption-desorption isotherm of carbon dioxide>

The adsorption-desorption isotherm was obtained by measuring adsorption/desorption of carbon dioxide at 273 K at a relative pressure (p/p0) of 0.00075 to 0.030 with respect to each of the non-graphitic carbonaceous materials used in Examples and Comparative Examples, by use of "Autosorb-iQ-MP" manufactured by Quantachrome Instruments.

[Pore volume]

The pore volume at a pore diameter of 0.35 to 1.47 nm was determined by applying "$CO_2$ at 273K on carbon" as a Calculation model to the adsorption-desorption isotherm obtained as above and performing analysis with the Grand Canonical Monte Carlo method.

[Amount of adsorption/desorption of carbon dioxide]

The amount of desorption/amount of adsorption was determined based on the ratio of the amount of desorption and the amount of adsorption at a relative pressure of 0.01, with the adsorption-desorption isotherm obtained as above.

<Raman spectrometry>

A Raman spectrum was measured with a light source at a laser wavelength of 532 nm and "LabRAM ARAMIS" manufactured by Horiba Ltd. Particles at five positions were randomly sampled with respect to each sample, and measurement was carried out. Measurement conditions included a wavelength range of 50 to 2000 $cm^{-1}$ and a cumulative number of 1000, and the average value of the five positions was calculated as a measured value. The half-value width was measured after peak separation between a D band (around 1360 $cm^{-1}$) and a G band (around 1590 $cm^{-1}$) in a spectrum obtained under the measurement conditions, carried out by fitting with the Gaussian/Lorentzian mixed function.

<Butanol true density measurement>

The true density $\rho_{Bt}$ was measured by a butanol method, according to the method prescribed in JIS R 7212. The mass ($m_1$) of a side tube-attached pycnometer having an inner volume of about 40 mL was accurately weighed. Next, a sample was flatly placed on the bottom portion of the pycnometer so as to have a thickness of about 10 mm, and then the mass ($m_2$) was accurately weighed. Thereto was gently added 1-butanol, and the depth was set at a level of about 20 mm from the bottom. Next, light vibration was applied to the pycnometer and no generation of any large bubbles was checked, and thereafter the resultant was placed in a vacuum desiccator and subjected to gradual evacuation to 2.0 to 2.7 kPa. This pressure was kept for 20 minutes or more, the pycnometer was taken out after termination of generation of bubbles, furthermore was filled with 1-butanol, and plugged and immersed in a constant-temperature water tank (regulated to 30±0.03°C) for 15 minutes or more, and the liquid level of 1-butanol was matched with the marked line. Next, this was taken out, the outside thereof was well wiped, cooling to room temperature was made, and thereafter the mass ($m_4$) was accurately weighed. Next, the same pycnometer was filled with only 1-butanol, and immersed in a constant-temperature water tank in the same manner as described above, matching with the marked line was made, and thereafter the mass ($m_3$) was weighed. Distilled water from which gas was removed by boiling immediately before use was taken in the pycnometer, the pycnometer was immersed in a constant-temperature water tank in the same manner as described above, matching with the marked line was made, and thereafter the mass ($m_5$) was weighed. The true density $\rho_{Bt}$ was calculated by the following formula. Here, d represents a specific gravity (0.9946) at 30°C.

[Formula 4]

$$\rho_{Bt} = \frac{m_2 - m_1}{m_2 - m_1 - (m_4 - m_3)} \times \frac{m_3 - m_1}{m_5 - m_1} d$$

<Elemental analysis>

Elemental analysis was performed by use of "oxygen-nitrogen-hydrogen analyzer EMGA-930" manufactured by Horiba Ltd.
The detection method in the apparatus was as follows: oxygen: inert gas fusion-nondispersive infrared absorption method (NDIR), nitrogen: inert gas fusion-thermal conductivity method (TCD), hydrogen: inert gas fusion-nondispersive infrared absorption method (NDIR). Calibration was made with $TiH_2$ (H standard sample), SS-3 (N,O standard sample), and SiN (N standard sample). 20 mg of a sample subjected to dehydration treatment at 250°C for about 10 minutes as pre-treatment was weighed and taken in a Sn capsule under dry air at a temperature less than (the dew point - 20°C), sealed with the remaining air being driven out, and then degassed in the analyzer at 1900°C for 60 seconds. Three analytes were analyzed, and the average value was defined as the analysis value.

<BET specific surface area by nitrogen adsorption method >

The specific surface area of each of the non-graphitic carbonaceous materials used in Examples and Comparative Examples is defined by the BET method (nitrogen adsorption BET three-point method) (BET specific surface area). An approximate equation derived from the BET equation is described below.

[Formula 5]

$$\frac{p}{v(p_0 - p)} = \frac{1}{v_m c} + \frac{c-1}{v_m c} \cdot \frac{p}{p_0}$$

The amount of adsorption (v) actually measured at a predetermined relative pressure (p/p0) measured by a multipoint method with nitrogen adsorption at a liquid nitrogen temperature was plugged in the approximate equation to determine vm, and the specific surface area of a sample was calculated by the following formula.

[Formula 6]

$$\text{Specific surface area} = \left(\frac{v_m N a}{22400}\right) \times 10^{-18}$$

In the formula, $v_m$ represents the amount of adsorption ($cm^3/g$) required for formation of a monolayer on a sample surface, v represents the amount of adsorption ($cm^3/g$) actually measured, $p_0$ represents the saturated vapor pressure, p represents the absolute pressure, c is a constant number (reflecting heat of adsorption), N represents the Avogadro number, $6.022 \times 10^{23}$, and a ($nm^2$) represents the area of an adsorbate molecule in the sample surface (molecular occupied cross-sectional area).

Specifically, "Autosorb-iQ-MP" manufactured by Quantachrome Instruments was used to measure the amount of adsorption of nitrogen to a sample at a liquid nitrogen temperature, as follows. The sample was packed in a sample tube, the sample tube was cooled to -196°C and here depressurized once, and thereafter nitrogen (purity 99.999%) was allowed to adsorb to the sample at a desired relative pressure. The content of a nitrogen element adsorbing to the sample at each desired relative pressure in achievement to an equilibrium pressure was defined as the amount of gas adsorption v.

<Mesopore volume by nitrogen adsorption>

"Autosorb-iQ-MP" manufactured by Quantachrome Instruments was used to measure a nitrogen adsorption-desorption isotherm of each of the non-graphitic carbonaceous materials used in Examples and Comparative Examples at 77 K after each carbonaceous material was packed in a sample tube and heat-treated under reduced pressure at 300°C 5 hours. The Barrett-Joyner-Halenda (BJH) method was applied to the adsorption-desorption isotherm obtained, and that at a pore diameter in a range of 2.5 nm to 33 nm was defined as the mesopore volume.

<Measurement of volumetric average particle size by laser diffraction method>

The volumetric average particle size of each of the graphite and non-graphitic carbonaceous materials used in Examples and Comparative Examples, by a wet laser diffraction method, was measured by the following method. A sample was charged into an aqueous solution containing 0.3% by mass of a surfactant ("Toriton X-100" manufactured by FUJIFILM Wako Pure Chemical Corporation), treated in an ultrasonic washing machine for 10 minutes or more, and dispersed in the aqueous solution. A particle size distribution of the dispersion liquid was measured at a refractive index of solvent of 1.33 in an absorption mode of particle permeability, by use of a particle diameter-particle size distribution measurement instrument ("Microtrac MT 3000" manufactured by MicrotracBEL Corp.). $D_{50}$ was a particle size at which the cumulative volume reached 50%, and the value was used as the volumetric average particle size.

[Table 1]

| Type of non-graphitic carbonaceous material | XRD half-value width (deg) | XRD d002 (nm) | $CO_2$ adsorption pore volume ($cm^3$/g) | $CO_2$ adsorption desorption/adsorption ratio | $N_2$ adsorption BET specific surface area ($m^2$/g) | $N_2$ adsorption BJH mesopore volume ($cm^3$/g) | Raman D band half-value width ($cm^{-1}$) | Butanol true density (g/cc) | Content of nitrogen (% by mass) | $D_{50}$ (μm) |
|---|---|---|---|---|---|---|---|---|---|---|
| A | 8.7 | 0.39 | 0.153 | 2.35 | 6.5 | 5.3 | 212 | 1.48 | 0.54 | 4.8 |
| B | 8.7 | 0.39 | 0.170 | 1.50 | 6.8 | 4.0 | 220 | 1.49 | 0.50 | 4.8 |
| C | 8.9 | 0.38 | 0.004 | 1.73 | 6.3 | 0.02 | 270 | 1.52 | 2.60 | 6.0 |
| D | 8.3 | 0.39 | 0.020 | 3.20 | 6.2 | 5.8 | 166 | 1.48 | 0.35 | 4.5 |
| E | 8.5 | 0.37 | 0.005 | 1.90 | 3.5 | 3.5 | 196 | 1.63 | 0.40 | 6.0 |
| F | 5.8 | 0.35 | 0.002 | 1.10 | 2.6 | 2.3 | 160 | 1.91 | 0.30 | 6.0 |

[Production of electrode

In each of Examples 1 to 9 and Comparative Examples 1 to 6, 97 parts by mass in total of the graphite and the non-graphitic carbanoceous material according to each composition described in Table 2, 1 part by mass of CM-Na (manufactured by DKS Co. Ltd.), 2 parts by mass of SBR (manufactured by JSR Corporation) and 90 parts by mass of ion-exchange water were mixed, and thus a slurry was obtained. The obtained slurry was applied to one surface of copper foil having a thickness of 15 $\mu$m, dried and pressed, and punched into a disc of $\varphi$14 mm, and thus an electrode was obtained. The weight of the electrode mixture was calculated by subtracting the weight of the copper foil punched into a disc of $\varphi$14 mm, from the weight of the obtained electrode. The weight of the active material was calculated by multiplying the weight of the electrode mixture with the weight ratio (97%) of the graphite and the non-graphitic carbonaceous material in the solid content in the mixture. The thickness of the electrode was measured at three or more points with a high-accuracy digimatic micrometer (MDH-25MB) manufactured by Mitutoyo Corporation, and the thickness of the copper foil was subtracted to calculate the mixture thickness. The basis weight of the electrode mixture was calculated by dividing the weight of the electrode mixture by the area of a circle of $\varphi$14 mm. The electrode mixture density before charge/discharge was calculated by dividing the weight of the electrode mixture by the mixture thickness and the area of a circle of $\varphi$14 mm.

[Production of non-aqueous electrolyte secondary battery]

The electrode produced as described above was used as a working electrode, and metallic lithium was used as a counter electrode and also a reference electrode, to produce a 2032-type coin cell. A solvent used was obtained by mixing ethylene carbonate, dimethyl carbonate and ethyl methyl carbonate at a volume ratio of 1:1:1. LiPF$_6$ was dissolved at a 1 mol/L of concentration in the solvent, and the resulting solution was used as an electrolyte. A separator used was a microporous film made of polypropylene. A coin cell was produced with a coin cell crimper (manufactured by Hohsen Corp.) in a glove box under an argon atmosphere.
The coin cell produced as described above was measured with respect to the CV area ratio by a cyclic voltammetry method, the electrode mixture density at a charge depth of 50%, the peak position of a resonance signal by $^7$Li nucleus-solid NMR analysis, the reversible capacity per volume, the full charge capacity, according to the following procedures. The results are shown in Table 2.

<Measurement of initial charge/discharge, electrode mixture density and reversible capacity per volume, and full charge capacity>

[Initial charge/discharge]

The coin cell produced as described above was subjected to a charge/discharge test at 25°C with a charge/discharge test apparatus ("TOSCAT" manufactured by Toyo System Co., Ltd.). The doping reaction and dedoping reaction of the carbon electrode with lithium were performed by a constant-current method. Herein, the doping reaction of the carbon electrode with lithium is designated as "charge" for convenience and the dedoping reaction of the carbon electrode with lithium is designated as "discharge" for convenience. Specifically, constant-current charge was performed at 0.2 C (the amount of current, leading to completion of charge at 1/0.2 = 5 hours) until a terminal voltage of 0.05 V was achieved, and a battery circuit was opened for 30 minutes after completion of the charge. Constant-current discharge was performed at 0.2 C, and the final voltage was 1.5 V. The charge/discharge operation was carried out three times or more so that the charge/discharge efficiency (discharge capacity/charge capacity in each cycle) was 99.5% or more. The charge capacity here was defined as a charge depth of 100%.

[Electrode mixture density at charge depth of 50%]

The coin cell after termination of the initial charge/discharge was subjected to constant-current charge at 0.2 C until a charge depth of 50% was achieved, and then disassembled with a coin cell disassembler (manufactured by Hohsen Corp.) in a glove box, and an electrode was taken out. Next, an excess electrolytic solution was washed off with diethyl carbonate, and the resultant was air-dried in a glove box. The thickness of the electrode was measured at three or more points with a high-accuracy digimatic micrometer (MDH-25MB) manufactured by Mitutoyo Corporation, and the thickness of the copper foil was subtracted to calculate the mixture thickness. The electrode mixture density was calculated by dividing the weight of the electrode mixture by the mixture thickness and the area of a circle of $\varphi$14 mm.

[Reversible capacity per volume]

The reversibly chargeable/dischargeable battery capacity per electrode mixture volume (mAh/cm$^3$) was calculated by dividing the battery capacity (mAh) in constant-current charge of the coin cell after termination of the initial charge/discharge, at 0.2 C to a terminal voltage of 0.05 V, by the active material weight (mAh/g), and furthermore multiplying the electrode mixture density. It means that, as the value is larger, the charge/discharge capacity per volume is more excellent.

[Full charge capacity]

The limit capacity (hereinafter, also referred to as "full charge capacity") at which doping with lithium was possible without deposition of any lithium metal (mAh/g) was calculated by dividing the battery capacity (mAh) indicating the local minimum value of voltage in constant-current charge of the coin cell after termination of the initial charge/discharge, at 0.1 C until a charge depth of 130% was achieved, by the active material weight. It means that, as the value is larger, the suppression effect of metallic lithium deposition in overcharge is more excellent.

[Reversible capacity per volume at full charge]

The limit capacity (hereinafter, also referred to as "reversible capacity per volume at full charge") at which doping with lithium was possible without deposition of any lithium metal, per electrode mixture volume (mAh/cm$^3$) was calculated by multiplying the electrode mixture density with the full charge capacity (mAh/g). It means that, as the value is larger, a high suppression effect of metallic lithium deposition in overcharge is obtained with a high charge/discharge capacity per volume being secured.

<Cyclic voltammetry>

The coin cell after termination of the initial charge/discharge was subjected to constant-current charge at 0.1 C until a terminal voltage of 0.01 V was achieved, and then cyclic voltammetry (CV) measurement with VMP-3 manufactured by TOYO Corporation. First, sweeping toward the reduction side was performed at a voltage sweeping rate of 0.01 mV/s until a terminal voltage of -0.05 V was achieved. Next, sweeping toward the oxidation side was similarly performed at a voltage sweeping rate of 0.01 mV/s until a terminal voltage of 0.5 V was achieved.
Not only a reduction current derived from lithium storage on the non-graphitic carbonaceous material, but also a reduction current due to metallic lithium deposition on the graphite electrode was generated on the reduction side. Not only an oxidation current derived from dedoping of the graphite electrode with lithium, but also an oxidation current in a range of about 0 to 80 mV due to dissolution of metallic lithium was generated on the oxidation side. Therefore, processing for subtracting the current contribution due to deposition/dissolution of metallic lithium was performed with the following reference voltage, and the amount of a lithium ion acceptable in the graphite electrode (area of region A) and the amount of a lithium ion reversibly chargeable/dischargeable (area of region B) in overcharge were calculated to determine the ratio of both the amounts (CV area ratio), thereby defining the potential ability to receive lithium, of the electrode.

E1: a point at which an absolute value of current in a range of -0.05 V ≤ E1 ≤ 0.01 V in the current-voltage curve on the reduction side is minimum
E2: an intersection point of a tangent line on which a slope in a range of -0.05 V ≤ E2 ≤ 0.01 V in the current-voltage curve on the reduction side is maximum, with a coordinate axis of voltage (current = 0 mA)
E3: a point at which an absolute value of current in a range of 0.05 V ≤ E3 ≤ 0.1 V in the current-voltage curve on the oxidation side is minimum
E4: a point at which a voltage of 0.3 V is achieved in a current-voltage curve on the oxidation side
Region A: a region surrounded by the current-voltage curve on the reduction side, a straight line passing through the reference point E1 and orthogonal to the coordinate axis of voltage (current = 0 mA), a straight line passing through the reference point E2 and orthogonal to the coordinate axis of voltage (current = 0 mA), and the coordinate axis of voltage (current = 0 mA)
Region B: a region surrounded by the current-voltage curve on the oxidation side, a straight line passing through the reference point E3 and orthogonal to the coordinate axis of voltage (current = 0 mA), a straight line passing through reference point E4 and orthogonal to the coordinate axis of voltage (current = 0 mA), and the coordinate axis of voltage (current = 0 mA)

<Measurement of peak position of resonance signal by $^7$Li nucleus-solid NMR analysis>

The coin cell after termination of the initial charge/discharge was subjected to constant-current charge at 0.1 C until a charge depth of 150% was achieved, and thereafter was disassembled in a glove box with a coin cell disassembler (manufactured by Hohsen Corp.) to take out an electrode. Next, an excess electrolytic solution was washed off with diethyl carbonate, and the resultant was air-dried in a glove box. The mixture was released from the electrode by use of ceramic tweezers, and packed in a solid NMR cell of $\varphi$3.2 mm. The peak position of a resonance signal by $^7$Li nucleus-solid NMR analysis was measured with "JNM-ECZ500R" manufactured by JEOL Ltd., by the MAS method under rotation of the cell at 5 kHz. In measurement, lithium chloride was used as an external standard substance, and assumed to be observed at 0 ppm. In $^7$Li nucleus-solid NMR of the electrode mixture, usually, a signal assigned to lithium stored in graphite was observed at 0 to 50 ppm, a signal assigned to lithium stored in the non-graphitic carbonaceous material was observed at 50 to 200 ppm, and a signal assigned to metallic lithium was observed around 260 ppm. In particular, a resonance signal observed in a range of 50 to 200 ppm was regulated in phase and the peak shape was made bilaterally symmetric, and the chemical shift value of a peak position here providing the local maximal value was read.

[Table 2]

| | Graphite | Non-graphitic carbonaceous mate-rial | Graphite/non-graphitic carbonaceous material ratio | Mixture basis weight (g/m²) | Amount of non-graphitic carbonaceous material based on 100 parts by mass of graphite (parts by mass) | CV area ratio A/B (%) | Electrode mixture density (g/cm³) | Electrode mixture density at charge depth of 50% (g/cm³) | Li-NMR peak at charge depth of 150% (ppm) | Particle size of non-graphitic carbonaceous materi-al/Particle size of graphite | Reversible capacity per volume (mAh/cm³) | Full charge capacity (mAh/g) | Reversible capacity per volume at full charge (mAh/cm³) |
|---|---|---|---|---|---|---|---|---|---|---|---|---|---|
| Example 1 | a | A | 90/10 | 90 | 11.1 | 8.4 | 1.56 | 1.37 | 91 | 0.30 | 443 | 380 | 519 |
| Example 2 | a | A | 95/5 | 90 | 5.3 | 5.8 | 1.55 | 1.35 | 91 | 0.30 | 448 | 373 | 502 |
| Example 3 | a | A | 97/3 | 90 | 3.1 | 4.2 | 1.57 | 1.35 | 91 | 0.30 | 453 | 372 | 504 |
| Example 4 | a | A | 90/10 | 75 | 11.1 | 8.4 | 1.56 | 1.37 | 91 | 0.30 | 450 | 383 | 524 |
| Example 5 | a | A | 90/10 | 60 | 11.1 | 8.4 | 1.56 | 1.37 | 91 | 0.30 | 452 | 380 | 519 |
| Example 6 | a | A | 75/25 | 90 | 33.3 | 17.5 | 1.50 | 1.36 | 91 | 0.30 | 410 | 400 | 544 |
| Example 7 | b | B | 85/15 | 94 | 17.6 | 8.3 | 1.48 | 1.31 | 90 | 0.32 | 384 | 376 | 491 |
| Example 8 | b | C | 85/15 | 90 | 17.6 | 4.5 | 1.47 | 1.31 | 91 | 0.41 | 386 | 376 | 493 |
| Example 9 | b | D | 85/15 | 91 | 17.6 | 8.1 | 1.49 | 1.31 | 130 | 0.32 | 385 | 376 | 492 |
| Comparative Example 1 | a | - | 100/0 | 90 | 0 | 3.2 | 1.56 | 1.34 | - | - | 454 | 367 | 490 |
| Comparative Example 2 | a | A | 10/90 | 90 | 900 | 27.2 | 1.02 | 0.99 | 91 | 0.30 | 199 | 440 | 436 |
| Comparative Example 3 | b | - | 100/0 | 92 | 0 | 2.9 | 1.60 | 1.35 | - | - | 414 | 351 | 474 |
| Comparative Example 4 | b | E | 95/5 | 94 | 5.3 | 3.1 | 1.56 | 1.36 | 105 | 0.41 | 412 | 351 | 477 |
| Comparative Example 5 | b | E | 90/10 | 90 | 11.1 | 3.5 | 1.53 | 1.32 | 104 | 0.41 | 386 | 353 | 466 |
| Comparative Example 6 | b | F | 95/5 | 91 | 5.3 | 3.0 | 1.59 | 1.38 | 40 | 0.41 | 427 | 354 | 490 |

[REFERENCE SIGNS LIST]

1: reference point E1
2: reference point E2
3: reference point E3
4: reference point E4
5: region A
6: region B
7: tangent line on which slope in range of -0.05 V to 0.01 V is maximum
8: coordinate axis of voltage (current = 0 mA)
9: straight line passing through reference point E1 and orthogonal to coordinate axis of voltage (current = 0 mA)
10: straight line passing through reference point E2 and orthogonal to coordinate axis of voltage (current = 0 mA)
11: straight line passing through reference point E3 and orthogonal to coordinate axis of voltage (current = 0 mA)
12: straight line passing through reference point E4 and orthogonal to coordinate axis of voltage (current = 0 mA)

**Claims**

1. An electrode comprising at least graphite, a binding agent, and a non-graphitic carbonaceous material, wherein, in a half-cell produced with the electrode as a working electrode, Li foil as a counter electrode, and a solution in which lithium hexafluorophosphate is dissolved at a concentration of 1 mol/L in a mixed solution of ethylene carbonate/dimethyl carbonate/ethyl methyl carbonate at a volume ratio of 1/1/1, as an electrolytic solution:

   (A) a ratio of an area of a region A to an area of a region B (A/B) is 4.0% or more, in which the areas are calculated based on the following reference points E1 to E4 in a cyclic voltammogram obtained by doping the electrode with lithium until a cell voltage of 0.01 V is achieved, and then sweeping the cell voltage from +0.01 V to -0.05 V toward the reduction side and further sweeping the cell voltage to +0.5 V toward the oxidation side at a sweeping rate of 0.01 mV/s in cyclic voltammetry:

   E1: a point at which an absolute value of current in a range of $-0.05 \text{ V} \leq E1 \leq 0.01 \text{ V}$ in a current-voltage curve on the reduction side is minimum
   E2: an intersection point of a tangent line on which a slope in a range of $-0.05 \text{ V} \leq E2 \leq 0.01 \text{ V}$ in a current-voltage curve on the reduction side is maximum, with a coordinate axis of voltage (current = 0 mA)
   E3: a point at which an absolute value of current in a range of $0.05 \text{ V} \leq E3 \leq 0.1 \text{ V}$ in a current-voltage curve on the oxidation side is minimum
   E4: a point at which a voltage of 0.3 V is achieved in a current-voltage curve on the oxidation side;
   the region A:
   a region surrounded by the current-voltage curve on the reduction side, a straight line passing through the reference point E1 and orthogonal to the coordinate axis of voltage (current = 0 mA), a straight line passing through the reference point E2 and orthogonal to the coordinate axis of voltage (current = 0 mA), and the coordinate axis of voltage (current = 0 mA); and
   the region B:
   a region surrounded by the current-voltage curve on the oxidation side, a straight line passing through the reference point E3 and orthogonal to the coordinate axis of voltage (current = 0 mA), a straight line passing through reference point E4 and orthogonal to the coordinate axis of voltage (current = 0 mA), and the coordinate axis of voltage (current = 0 mA); and

   (B) an electrode mixture density at a charge depth of 50% is 1.30 $\text{g/cm}^3$ or more under the assumption that a capacity in doping of the electrode with lithium until a cell voltage of 0.05 V is achieved is a charge depth of 100%.

2. The electrode according to claim 1, wherein a half-band width of a main peak observed in a range of 2θ = 15 to 30° in powder X-ray diffraction measurement by CuKα ray, of the non-graphitic carbonaceous material, is 8.0° or more.

3. The electrode according to claim 1, wherein, in the half-cell, a peak chemical shift value of a resonance signal observed at 50 ppm or more and 200 ppm or less with lithium chloride as reference, by $^7$Li nucleus-solid NMR analysis of an electrode mixture doped with lithium until a charge depth of 150% is achieved, is 80 ppm or more under the assumption that a capacity in doping of the electrode with lithium until a cell voltage of 0.05 V is achieved is a charge depth of 100%.

4.  The electrode according to claim 1, wherein a pore volume of the non-graphitic carbonaceous material, as calculated according to the Grand Canonical Monte Carlo simulation, based on an adsorption-desorption isotherm by a carbon dioxide adsorption-desorption method, is 0.004 $cm^3/g$ or more and 0.200 $cm^3/g$ or less.

5.  The electrode according to claim 1, wherein a value of a half-value width of a peak around 1360 $cm^{-1}$ in a Raman spectrum observed by laser Raman spectroscopy, of the non-graphitic carbonaceous material, is 160 $cm^{-1}$ or more and 270 $cm^{-1}$ or less.

6.  The electrode according to claim 1, wherein an average plane distance $d_{002}$ of the (002) plane of the non-graphitic carbonaceous material, as calculated with the Bragg equation in powder X-ray diffraction measurement by $CuK\alpha$ ray, is 0.36 nm or more and 0.42 nm or less.

7.  The electrode according to claim 1, wherein the non-graphitic carbonaceous material contains 0.3% by mass or more of a nitrogen element.

8.  The electrode according to claim 1, wherein a ratio of an amount of desorption and an amount of adsorption (amount of desorption/amount of adsorption) at a relative pressure of 0.01 in an adsorption-desorption isotherm by a carbon dioxide adsorption-desorption method, of the non-graphitic carbonaceous material, is 1.05 or more.

9.  The electrode according to claim 1, wherein a mesopore volume of the non-graphitic carbonaceous material, as calculated according to the BJH method, based on a nitrogen adsorption-desorption isotherm by a nitrogen adsorption method, is 3.7 $mm^3/g$ or more and 41 $mm^3/g$ or less.

10. The electrode according to claim 1, wherein a volumetric average particle size ($D_{50}$) of the non-graphitic carbonaceous material, by a laser diffraction method, is 1.3 $\mu$m or more and 9.5 $\mu$m or less.

11. The electrode according to claim 1, wherein a BET specific surface area of the non-graphitic carbonaceous material, as calculated according to the BET method, based on a nitrogen adsorption-desorption isotherm by a nitrogen adsorption method, is 3 $m^2/g$ or more and 60 $m^2/g$ or less.

12. The electrode according to claim 1, comprising 1 part by mass or more and 45 parts by mass or less of the non-graphitic carbonaceous material based on 100 parts by mass of the graphite.

13. The electrode according to claim 1, wherein a ratio of a volumetric average particle size ($D_{50}$) of the non-graphitic carbonaceous material, by a laser diffraction method, and a volumetric average particle size ($D_{50}$) of the graphite, by a laser diffraction method, (particle size of non-graphitic carbonaceous material/particle size of graphite), is 0.20 or more and 0.80 or less.

14. The electrode according to claim 1, wherein the non-graphitic carbonaceous material is a hardly graphitizable carbonaceous material.

15. A power storage element comprising the electrode according to claim 1.

[FIG.1]

## INTERNATIONAL SEARCH REPORT

| International application No. |
|---|
| **PCT/JP2022/042427** |

**A.  CLASSIFICATION OF SUBJECT MATTER**

*H01M 4/133*(2010.01)i; *H01M 4/36*(2006.01)i; *H01M 4/587*(2010.01)i
FI:  H01M4/133; H01M4/36 D; H01M4/587

According to International Patent Classification (IPC) or to both national classification and IPC

**B.  FIELDS SEARCHED**

Minimum documentation searched (classification system followed by classification symbols)

H01M4/133; H01M4/36; H01M4/587

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 2010-245017 A (EQUOS RESEARCH CO., LTD.) 28 October 2010 (2010-10-28) | 1-15 |
| A | JP 11-73990 A (BESENHARD, Jürgen Otto) 16 March 1999 (1999-03-16) | 1-15 |
| A | JP 2012-89267 A (UNIVERISTY OF WASEDA) 10 May 2012 (2012-05-10) | 1-15 |
| A | CN 111370650 A (XIANGTAN UNIVERSITY) 03 July 2020 (2020-07-03) | 1-15 |
| A | US 2020/0395599 A1 (PURDUE RESEARCH FOUNDATION) 17 December 2020 (2020-12-17) | 1-15 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 January 2023** | **31 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/042427**

| Patent document cited in search report | | | Publication date (day/month/year) | Patent family member(s) | | | Publication date (day/month/year) |
|---|---|---|---|---|---|---|---|
| JP | 2010-245017 | A | 28 October 2010 | JP | 2011-70773 | A | |
| JP | 11-73990 | A | 16 March 1999 | (Family: none) | | | |
| JP | 2012-89267 | A | 10 May 2012 | WO | 2012/050155 | A1 | |
| CN | 111370650 | A | 03 July 2020 | (Family: none) | | | |
| US | 2020/0395599 | A1 | 17 December 2020 | US | 2022/0259772 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015152092 A1